# EUROPEAN PATENT APPLICATION

(11) **EP 4 711 036 A1**
(43) Date of publication of application: **18.03.2026**
(21) Application number: 25306470.3
(22) Date of filing: 12.09.2025
(51) Int. Cl.: B01J 8/00, B01J 8/02, B01J 8/06

(54) **CHEMICAL DECOMPOSITION USING CATALYTIC REACTOR HEATED BY MAGNETIC INDUCTION**

(30) Priority: 16.09.2024 EP 24306526
(71) Applicant: Technip Energies France, 92741 Nanterre Cedex (FR)
(72) Inventor: MAZINGAND, Hervé, 92741 Nanterre Cedex (FR); MAENHAUT, Marieke, 92741 Nanterre Cedex (FR); BRUNO, Chaudret, 92741 Nanterre Cedex (FR); GILET, Angelique, 92741 Nanterre Cedex (FR); DRAGOMIR-MATIES, Georgiana, 92741 Nanterre Cedex (FR)
(74) Representative: Edson, Russell Gregory

(57) **Abstract**

A system can include a catalytic reactor heated using magnetic induction to perform a magnetically induced decomposition reaction. The catalytic reactor can include a housing coupled with a feedstock source to receive a flow of an inorganic compound in gaseous form that can flow through the catalytic reactor. The housing can include a metal-based catalyst selected to decompose the inorganic compound into one or more reaction products within a predefined temperature range. The metal-based catalyst can include a heating agent that can increase in temperature when exposed to a magnetic field. A coil can be positioned around the housing to provide the magnetic field to heat the metal-based catalyst using magnetic induction to be within the predefined temperature range.

## Description

### Technical Field

The present disclosure relates generally to chemical processing and, more particularly (although not necessarily exclusively), to using a catalytic reactor heated by magnetic induction to perform a decomposition reaction.

### Background

Currently, energy infrastructure is transitioning from traditional fossil fuels and other traditional hydrocarbon fuel sources to reduce carbon emissions. Hydrogen is a potential candidate to replace traditional hydrocarbon fuel sources. Conventional hydrogen production can involve catalytic steam reforming of fossil fuels, such as natural gas. Electrolysis of water is another conventional method of producing hydrogen. Hydrogen can be used to produce energy via fuel cells that use hydrogen as an input to generate water and heat.

### Summary

According to some aspects of the present disclosure, a catalytic reactor heated by magnetic induction to perform chemical decomposition, a method, and a system including the catalytic reactor and one or more subsystems are provided according to one or more of the following examples. As used below, any reference to a series of examples is to be understood as a reference to each of those examples disjunctively (e.g., "Examples 1-4" is to be understood as "Examples 1, 2, 3, or 4").

Example 1 is a catalytic reactor comprising: a housing coupled with a feedstock source to receive a flow of an inorganic compound in gaseous form that flows through the catalytic reactor, the housing comprising: a metal-based catalyst selected to decompose the inorganic compound into one or more reaction products within a predefined temperature range, wherein the metal-based catalyst comprises a heating agent configured to increase in temperature when exposed to a magnetic field; and a coil positioned around the housing to provide the magnetic field to heat the metal-based catalyst using magnetic induction to be within the predefined temperature range.

Example 2 is the catalytic reactor of example(s) 1, wherein the heating agent comprises iron filaments having a thickness ranging from 40 µm to 300 µm.

Example 3 is the catalytic reactor of example(s) 1-2, wherein the metal-based catalyst is coated with a protective compound to prevent deactivation of the metal-based catalyst.

Example 4 is the catalytic reactor of example(s) 1-3, wherein the predefined temperature range is from 300 °C to 700 °C.

Example 5 is the catalytic reactor of example(s) 1-4, wherein the metal-based catalyst comprises a plurality of metallic nanoparticles coupled to a catalyst support, and wherein the plurality of metallic nanoparticles comprises Ru or Ni.

Example 6 is the catalytic reactor of example(s) 1-5, wherein a metal loading of the plurality of metallic nanoparticles ranges from 1.5 wt. % to 10 wt. %.

Example 7 is the catalytic reactor of example(s) 1-6, wherein the inorganic compound comprises ammonia, and wherein the one or more reaction products comprise nitrogen and hydrogen.

Example 8 is the catalytic reactor of example(s) 1-7, wherein the catalyst support comprises carbon, a metal oxide, a silicon oxide, a molecular sieve, or a metal-organic framework.

Example 9 is the catalytic reactor of example(s) 1-8, wherein a magnetic field amplitude of the magnetic field provided by the coil ranges from 10 mT to 100 mT.

Example 10 is a method comprising: providing a metal-based catalyst positioned in a housing of a catalytic reactor, the metal-based catalyst selected to decompose an inorganic compound into one or more reaction products within a predefined temperature range, wherein the metal-based catalyst comprises a heating agent that increases in temperature when exposed to a magnetic field; receiving, by the catalytic reactor coupled with a feedstock source, a flow of the inorganic compound in gaseous form; heating the metal-based catalyst to be within the predefined temperature range using a coil positioned around the catalytic reactor, the coil providing the magnetic field to heat the metal-based catalyst using magnetic induction; and generating the one or more reaction products by decomposing the inorganic compound.

Example 11 is the method of example(s) 10, wherein the heating agent comprises iron filaments having a thickness ranging from 40 µm to 300 µm.

Example 12 is the method of example(s) 10-11, wherein the metal-based catalyst is coated with a protective compound to prevent deactivation of the metal-based catalyst.

Example 13 is the method of example(s) 10-12, wherein the predefined temperature range is from 300 °C to 700 °C.

Example 14 is the method of example(s) 10-13, wherein the metal-based catalyst comprises a plurality of metallic nanoparticles coupled to a catalyst support, and wherein the plurality of metallic nanoparticles comprises Ru or Ni.

Example 15 is the method of example(s) 10-14, wherein the inorganic compound comprises ammonia, and wherein the one or more reaction products comprise nitrogen and hydrogen.

Example 16 is the method of example(s) 10-15, wherein a magnetic field amplitude of the magnetic field provided by the coil ranges from 10 mT to 100 mT.

Example 17 is the method of example(s) 10-16, further comprising separating at least one reaction product of the one or more reaction products to generate a purified gaseous product that is usable as a fuel source.

Example 18 is a system comprising: a catalytic reactor coupled with a feedstock source to receives a flow of an inorganic compound in gaseous form to decompose the inorganic compound into one or more reaction products, the catalytic reactor comprising: a housing comprising a metal-based catalyst that decomposes the inorganic compound into the one or more reaction products within a predefined temperature range, wherein the metal-based catalyst comprises a heating agent configured to increase in temperature when exposed to a magnetic field; and a coil positioned around the housing of the catalytic reactor to provide the magnetic field to heat the metal-based catalyst using magnetic induction to be within the predefined temperature range; and one or more subsystems that receives an outlet fluid flow of the catalytic reactor to generate a purified gaseous product using the one or more reaction products, the purified gaseous product usable as a fuel source.

Example 19 is the system of example(s) 18, wherein the predefined temperature range is from 300 °C to 700 °C.

Example 20 is the system of example(s) 18-19, wherein the heating agent comprises iron filaments having a thickness ranging from 40 µm to 300 µm.

This summary is not intended to identify key or essential features of the claimed subject matter, nor is it intended to be used in isolation to determine the scope of the claimed subject matter. The subject matter should be understood by reference to appropriate portions of the specification, any of the drawings, and the claims.

The foregoing, together with other features and examples, will become more apparent upon referring to the following specification, claims, and accompanying drawings.

### Brief Description of the Drawings

FIG. 1 is a block diagram of a system including a catalytic reactor heated using magnetic induction that is usable to decompose an inorganic compound according to some examples of the present disclosure.
FIG. 2 is a schematic of an example catalytic reactor heated using magnetic induction according to some examples of the present disclosure.
FIG. 3 is a graph illustrating an x-ray diffraction (XRD) pattern for an example Ni-containing catalyst deposited on silica-alumina supports with a 10 wt. % metal loading according to some examples of the present disclosure.
FIG. 4 is a graph illustrating an XRD pattern for example Ru-containing catalysts deposited on silica-alumina supports with 2 wt. % metal loading or 5 wt. % metal loading according to some examples of the present disclosure.
FIG. 5 is a transmission electron microscopy (TEM) image of an example Ni-containing catalyst deposited on silica-alumina supports with 10 wt. % metal loading according to some examples of the present disclosure.
FIG. 6 is a TEM image of an example Ru-containing catalyst deposited on silica-alumina supports with 5 wt. % metal loading according to some examples of the present disclosure.
FIG. 7 is a TEM image of an example Ru-containing catalyst deposited on silica-alumina supports with 2 wt. % metal loading according to some examples of the present disclosure.
FIG. 8 is a scanning electron microscope (SEM) image of an example Ni-containing catalyst deposited on silica-alumina supports with 10 wt. % metal loading according to some examples of the present disclosure.
FIG. 9 is an SEM image of an example Ru-containing catalyst deposited on silica-alumina supports with 5 wt. % metal loading according to some examples of the present disclosure.
FIG. 10 is an SEM image of an example Ru-containing catalyst deposited on silica-alumina supports with 2 wt. % metal loading according to some examples of the present disclosure.
FIG. 11 is a graph of a XRD pattern of an example iron wool after six runs at a magnetic field amplitude of 17.6 mT according to some examples of the present disclosure.
FIG. 12 is an SEM image of the example iron wool of FIG. 11 after six runs at a magnetic field amplitude of 17.6 mT according to some examples of the present disclosure.
FIG. 13 is another SEM image of the example iron wool of FIG. 11 after six runs at a magnetic field amplitude of 17.6 mT according to some examples of the present disclosure.
FIG. 14 is a graph of an energy dispersive X-ray (EDX) analysis of the example iron wool of FIG. 11 after six runs at a magnetic field amplitude of 17.6 mT according to some examples of the present disclosure.
FIG. 15 is a graph of an XRD diffraction pattern of an example iron wool after six runs at a magnetic field amplitude of 17.6 mT or 13 mT according to some examples of the present disclosure.
FIG. 16 is an SEM image of an example iron wool coated with silica after seven runs at a magnetic field amplitude of 23.3 mT according to some examples of the present disclosure.
FIG. 17 is another SEM image of an example iron wool coated with silica after seven runs at a magnetic field amplitude of 23.3 mT according to some examples of the present disclosure.
FIG. 18 is a graph of an EDX analysis of an example iron wool coated with silica after seven runs at a magnetic field amplitude of 23.3 mT according to some examples of the present disclosure.
FIG. 19 is an SEM image of an example thick iron wool after ten runs at a magnetic field amplitude of 17.6 mT according to some examples of the present disclosure.
FIG. 20 is another SEM image of an example thick iron wool after ten runs at a magnetic field amplitude of 17.6 mT according to some examples of the present disclosure.
FIG. 21 is an EDX analysis of an example thick iron wool after ten runs at a magnetic field amplitude of 17.6 mT according to some examples of the present disclosure.
FIG. 22 is an XRD pattern of an example iron wool according to some examples of the present disclosure.
FIG. 23 is an XRD pattern of an example Ni-containing catalyst deposited on silica-alumina supports with 10 wt. % metal loading before catalysis and after catalysis according to some examples of the present disclosure.
FIG. 24 is a TEM image of the example Ni-containing catalyst of FIG. 23 after catalysis according to some examples of the present disclosure.
FIG. 25 is a TEM image of an example Ru-containing catalyst deposited on silica-alumina supports with 2 wt. % metal loading before catalysis according to some examples of the present disclosure.
FIG. 26 is a TEM image of the example Ru-containing catalyst of FIG. 25 after catalysis according to some examples of the present disclosure.
FIG. 27 is a TEM image of an example Ru-containing catalyst deposited on silica-alumina supports with 5 wt. % metal loading before catalysis according to some examples of the present disclosure.
FIG. 28 is a TEM image of the example Ru-containing catalyst of FIG. 27 after catalysis according to some examples of the present disclosure.
FIG. 29 is a flowchart of a process to decompose an inorganic compound using a catalytic reactor heated using magnetic induction according to some examples of the present disclosure.

### Detailed Description

Certain aspects and examples of the present disclosure relate to a chemical decomposition system that includes a catalytic reactor heated using magnetic induction. In some cases, the chemical decomposition can receive a feedstock including ammonia gas that can undergo a decomposition reaction in the catalytic reactor to generate an output mixture including hydrogen gas and nitrogen gas. The hydrogen gas can be provided as a fuel source for hydrogen fuel cells. The catalytic reactor can include a catalyst to facilitate the production of hydrogen, such as by reducing an operation temperature at which the decomposition reaction is performed. The output mixture may then be provided as an input to a separator that is separate from the catalytic reactor within the chemical decomposition system to isolate the hydrogen gas as an output. Because the decomposition reaction can require elevated temperatures to convert ammonia into hydrogen and nitrogen, the catalytic reactor can be heated using magnetic induction. Compared to other reactors or heating systems that may use a fired source, such as hydrocarbon fuel, to generate heat, the catalytic reactor can instead use electricity, which can provide enhanced efficiency, enhanced control, reduced emissions, and the like.

Current energy infrastructure is dependent on using fossil energy sources, such as natural gas or oil, which are limited in quantity and associated with emission of large amounts of carbon dioxide, thereby contributing to global warming. Accordingly, energy in modern times is beginning to transition to electricity or other energy sources that have low-to-no direct emission. Due to this energy transition, replacing the fossil energy sources with fuel sources that are more abundant and produce less or no greenhouse emissions is desirable. Hydrogen is a potential candidate to replace the fossil energy sources. However, transporting gaseous hydrogen can be challenging and inefficient. In particular, since hydrogen has a relatively low volumetric energy density, transporting, storing, and delivering hydrogen to a point of use can be costly and inefficient. For instance, transporting large amounts of hydrogen can involve liquefying the hydrogen gas to transport as a liquid or pressurizing the hydrogen gas to deliver the hydrogen gas as a compressed gas. Additionally, hydrogen can diffuse through storage materials, leading to embrittlement or weakening of the storage materials.

To avoid transporting or storing hydrogen, hydrogen carriers that store hydrogen in a different chemical state rather than as free hydrogen molecules can be transported and used as an input to suitable processes to generate hydrogen at a point of delivery. In particular, ammonia is a carbon-free carrier with a relatively high hydrogen transport density and can be decomposed to produce hydrogen and nitrogen. Additionally, ammonia can liquefy at low pressure, facilitating storage and transport while using a relatively low amount of energy. But, using the hydrogen carriers, such as ammonia, can pose additional challenges. For instance, the decomposition of ammonia is endothermic, which requires a large amount of energy input to maintain suitable reaction conditions and suitable conversion rates. Conventional operation temperatures where the decomposition reaction of ammonia is thermodynamically favorable can range from 400 °C to 600 °C. Even at the conventional operation temperatures, reaction kinetics of the decomposition reaction can remain slow, such as due to a high activation energy for N-H bond cleavage or due to N₂ desorption.

The systems and methods of the present disclosure can overcome one or more of the abovementioned problems by using a catalytic reactor heated using magnetic induction to decompose ammonia and generate hydrogen. The catalytic reactor can receive a feedstock including ammonia that can undergo the decomposition reaction in the catalytic reactor to generate hydrogen. As noted above, the decomposition reaction is an endothermic reaction that requires elevated temperatures to successfully decompose ammonia into hydrogen and nitrogen. Accordingly, the catalytic reactor can include a heating device that can generate a magnetic field to heat contents of the catalytic reactor using magnetic induction. In particular, the heating device can heat a catalyst, a catalyst support, a magnetically receiving heating agent mixed with the catalyst, or a combination thereof. Additionally, the heating device can be electrically powered, which can be more reliable, more efficient, and produce less carbon emissions compared to using a fired heater or other heating systems that use hydrocarbon fuels. As described herein, the catalytic heater can produce a higher conversion of ammonia at lower temperatures compared to conventional techniques.

Illustrative examples are given to introduce the reader to the general subject matter discussed herein and are not intended to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

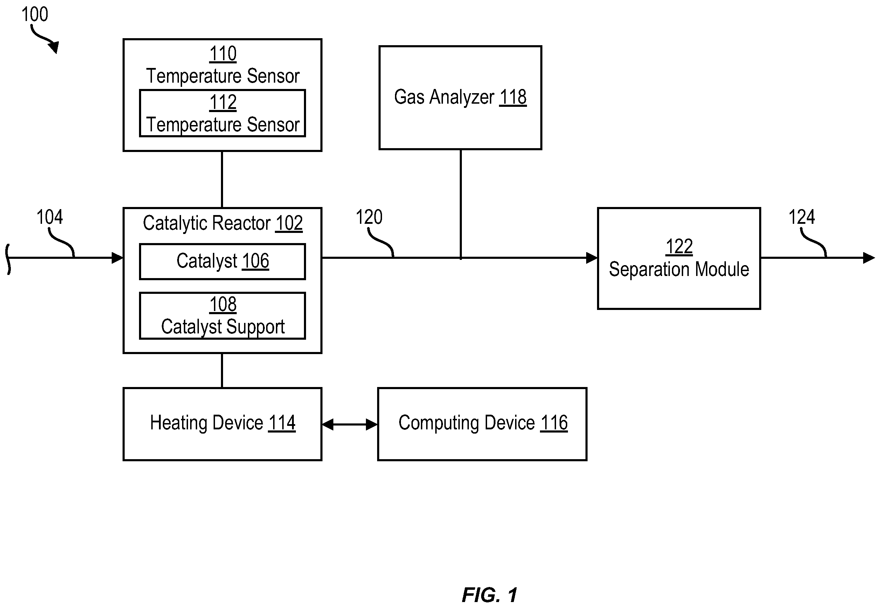

FIG. 1 is a block diagram of a system 100 including a catalytic reactor 102 heated using magnetic induction that is usable to decompose an inorganic compound according to some examples of the present disclosure. In some examples, the catalytic reactor 102 can perform a decomposition reaction using a feedstock 104 that can include the inorganic compound, such as ammonia. The feedstock 104 can also be referred to as a feedstock source. In some examples, the decomposition reaction can involve decomposing the inorganic compound to produce a gaseous fuel source. As an example, the feedstock 104 can be any suitable ammonia-rich stream and can be provided as a continuous flow. In some cases, the feedstock 104 may provide a high-purity (e.g., higher than approximately 80%) stream of the inorganic compound.

As shown in the reaction below, the decomposition reaction can correspond to a decomposition of ammonia into one or more reaction products, such as hydrogen and nitrogen, of the decomposition reaction.

2NH₃(g) ↔ N₂(g) + 3H₂(g), Δ*H_{R}* = +92 kJ mol⁻¹

Hydrogen can be provided as the gaseous fuel source to fuel cells that then can produce electricity, water, heat, or a combination thereof. Additionally or alternatively, the hydrogen produced using the decomposition reaction can be provided as an input to other chemical processes, such as hydrocracking of oil.

As indicated in the reaction above, the decomposition reaction can be associated with a positive enthalpy of reaction, indicating that the decomposition reaction is endothermic. Accordingly, the generation of hydrogen may be favored by relatively high temperatures, such as above 500 °C. To facilitate the decomposition reaction, the catalytic reactor 102 can include a metal-based catalyst 106 that can enable a lower temperature to be used to perform the decomposition reaction. More specifically, the metal-based catalyst 106 can lower an activation energy of the decomposition reaction that is needed to enable the decomposition reaction to proceed with generating the reaction products. As described herein, the decomposition reaction can occur within a predefined temperature range of from 300 °C to 700 °C (e.g., 300 °C, 400 °C, 500 °C, 600 °C, 700 °C, or anywhere in between). As an example, the predefined temperature range can be from 300 °C to 500 °C, from 400 °C to 600 °C, or from 500 °C to 700 °C.

Once the catalytic reactor 102 receives the feedstock 104, the feedstock 104 can flow through the catalytic reactor 102 and contact the metal-based catalyst 106. Within the catalytic reactor 102, the inorganic compound of the feedstock 104 can undergo the decomposition reaction. In some cases, the inorganic compound may undergo the decomposition reaction with or without the metal-based catalyst 106. In general, the metal-based catalyst 106 is not consumed during the decomposition reaction such that the metal-based catalyst 106 can be reused or recycled for use in future reactions. In some cases, the metal-based catalyst 106 may become deactivated over time, such as due to a formation of nitrides (e.g., nitration) on a surface of the metal-based catalyst 106. The nitrides can inhibit catalytic activity or selectivity of the metal-based catalyst 106. To prevent or minimize the deactivation of the metal-based catalyst 106, a protective compound (e.g., silica) can be deposited on the surface of the metal-based catalyst 106 as a coating. As an example, if the metal-based catalyst 106 includes iron, the protective compound can decrease an amount of iron nitrides that form on a protected surface of the metal-based catalyst 106 compared to an unprotected surface of the metal-based catalyst 106. Accordingly, the protective compound can reduce degradation of the metal-based catalyst 106 and increase recyclability of the metal-based catalyst 106.

Examples of the catalytic reactor 102 can include heterogeneous catalytic reactors, such as a quartz reactor or a fixed bed reactor. In some implementations in which the catalytic reactor 102 is a fixed bed reactor, the metal-based catalyst 106 can be provided in a catalyst bed that remains stationary while a reactant (e.g., ammonia of the feedstock 104) flows through the catalyst bed. Heterogeneous catalytic reactors can implement heterogenous catalysis in which the metal-based catalyst 106 is in a different physical state than a reactant or reaction product of the decomposition reaction. For example, the metal-based catalyst 106 can be a solid, whereas ammonia, hydrogen, and nitrogen are gases.

In some examples, the metal-based catalyst 106 can be a metal-supported catalyst where metallic nanoparticles are deposited on or otherwise coupled with a catalyst support 108. A metal loading of the metallic nanoparticles with respect to the catalyst support 108 can be an adjustable parameter. The metal loading can indicate an amount (e.g., a weight percent) of the metallic nanoparticles that have been deposited on the catalyst support 108. As an example, the metal loading of the metallic nanoparticles may range from 1.5 wt. % to 10 wt. % (e.g., from 1.5 wt. % to 3 wt. %, from 3 wt. % to 5 wt. %, or from 5 wt. % to 10 wt. %). In some cases, increasing metal loading can correspond to more catalytic activity up to a certain threshold after which the catalytic activity may not appreciably increase with increased metal loading. Examples of the metallic nanoparticles can include noble metals (e.g., ruthenium (Ru), iridium (Ir), palladium (Pd), rhodium (Rh), etc.) or non-noble metals (e.g., cobalt (Co), iron (Fe), nickel (Ni), copper (Cu), etc.). The metallic nanoparticles may be selected based on catalytic activity with respect to the decomposition reaction. For example, with respect to ammonia decomposition, due to its Ru-N binding strength, Ru can exhibit relatively high catalytic activity at relatively low temperatures compared to other metals.

Examples of the catalyst support 108 can include carbon-based supports (e.g., active carbon, carbon nanotubes, graphene, etc.), metal oxides, silicon oxides, molecular sieves, metal-organic frameworks (MOF), or a combination thereof. The catalyst support 108 may be non-acidic, electrically conductive, thermally conductive, or a combination thereof. The catalyst support 108 can increase surface area of the metal-based catalyst 106, modify surface pH (e.g., acidity or alkalinity), improve stability and conductivity, or a combination thereof. In some cases, the catalyst support 108 may not directly participate in the decomposition reaction.

In general, synthesis methods of the metal-based catalyst 106 can be scalable, such as up to a gram scale. In some implementations, synthesizing the metal-based catalyst 106 can involve impregnation of a metal precursor (e.g., an organometallic precursor) on the catalyst support 108. For instance, certain catalysts that include Ru can be synthesized by impregnating a Ru precursor, dissolved in tetrahydrofuran (THF), on an oxide support (e.g., silica-alumina oxides (SiRAlOx)) for 24 hours under an inert atmosphere. As an example, the Ru precursor can be (1,5-cyclooctadiene)(1,3,5-cyclooctatriene)ruthenium [Ru(COD)(COT)]. After impregnating the Ru precursor, decomposition can be performed under a reductive atmosphere of hydrogen to form Ru-supported nanoparticles. The Ru-supported nanoparticles can then be separated (e.g., by decantation) and washed with a solvent (e.g., toluene). In some cases for the Ru-supported nanoparticles, an amount of metal impregnated on the catalyst support 108 can range from 1.5 wt. % to 3.3 wt. %. Additionally, the Ru-supported nanoparticles are suitably dispersed on the catalyst support 108.

In other implementations, synthesizing the metal-based catalyst 106 can involve thermal decomposition of the metal precursor in the presence of a catalyst support 108. For example, certain catalysts that include Ni can be synthesized by thermal decomposition of a Ni precursor in, for example, mesitylene at a suitable temperature (e.g., 150 °C) under an inert atmosphere in the presence of an oxide support to generate Ni-supported nanoparticles. Examples of the Ni precursor can include bis(1,5-cyclooctadiene)nickel(0) [Ni(COD)₂] or bis(N,N'-diisopropylacetamidinato)nickel(II) [Ni{MeC(N*i*Pr)₂}₂ (*i*Pr = C₃H₇, Me = CH₃)]. Examples of the oxide support can include SiRAlOx, aluminum oxide, titanium dioxide, etc. Similar to the Ru-supported nanoparticles, the Ni-supported nanoparticles can be separated by, for example, decantation and washed with a solvent, such as toluene. In some cases for the Ni-supported nanoparticles, an amount of metal impregnated on the catalyst support 108 can be up to about 8 wt. %. Additionally, the Ni-supported nanoparticles are suitably dispersed on the catalyst support 108.

In some examples, the catalytic reactor 102 can include a heating agent positioned in contact with the metal-based catalyst 106. The heating agent can be a component of or otherwise part of the metal-based catalyst 106. For instance, the heating agent may be a solid compound mixed with the metal-based catalyst 106. The heating agent can include a conductive compound that can increase in temperature (e.g., generate heat) when exposed to a magnetic field. Additionally, the heating agent may be a magnetically receiving compound (e.g., ferromagnetic). The magnetically receiving compound can have certain properties related to magnetism, such as being attracted to or repelled by magnetic fields, being capable of being magnetized, being capable of producing magnetic fields, or a combination thereof. In some implementations, the metal-based catalyst 106 can function as both the heating agent and as a catalyst that facilitates the decomposition reaction. For example, if iron (e.g., iron wool) is provided as part of the metal-based catalyst 106, a separate heating agent may be unnecessary or redundant. Iron wool can be a bundle of flexible iron or steel filaments and can also be referred to as steel wool or wire wool. In some examples, the heating agent can include iron filaments having a thickness ranging from 40 µm to 300 µm (e.g., from 40 µm to 80 µm, from 80 µm to 120 µm, from 120 µm to 160 µm, from 160 µm to 200 µm, from 200 µm to 240 µm, from 240 µm to 280 µm, or from 280 µm to 300 µm). For example, the thickness of the iron filaments may be 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 200 µm, 210 µm, 220 µm, 230 µm, 240 µm, 250 µm, 260 µm, 270 µm, 280 µm, 290 µm, 300 µm, or anywhere in between. An advantage of employing iron filaments with a thickness ranging from 40 µm to 300 µm as the heating agent lies in their beneficial balance between thermal responsiveness, structural integrity, and ease of manufacture, which can also provide economic advantages. This dimensional range corresponds to commercially available iron wool, which is widely accessible and inexpensive due to the abundance of iron and its suitability for bulk manufacturing. The filament thickness ensures sufficient surface area for effective magnetic induction heating while maintaining mechanical robustness under repeated thermal cycling. Experimental results demonstrate that iron wool within this thickness range enables rapid attainment of reaction temperatures conducive to complete ammonia decomposition, with conversion rates reaching up to 100% under moderate magnetic field amplitudes. Furthermore, the use of iron filaments as both heating agent and catalyst support simplifies reactor design and reduces material costs, offering a scalable and energy-efficient solution for hydrogen production.

As illustrated in FIG. 1, the system 100 can include a temperature sensor 110 coupled with the catalytic reactor 102. The temperature sensor 110 can collect temperature data 112 (e.g., temperature readings) of the catalytic reactor 102 over a period of time, such as while the catalytic reactor 102 is in operation or receiving the feedstock 104. Additionally or alternatively, the temperature sensor 110 may collect the temperature data 112 at regular time intervals or periodically (e.g., in 10-second increments). As an example, the temperature sensor 110 can be a thermocouple (e.g., a K-type thermocouple) that can be positioned adjacent to or within a housing of the catalytic reactor 102 to monitor a temperature within the catalytic reactor 102. As another example, the temperature sensor 110 may be an infrared camera. In some cases, the temperature within the catalytic reactor 102 can be referred to as a reaction temperature or a reactor temperature. In particular, the thermocouple can monitor a temperature of the catalyst bed positioned in the catalytic reactor 102.

Additionally, the system 100 can include a heating device 114 coupled with the catalytic reactor 102. The heating device 114 can generate a magnetic field (e.g., using a coil or an electromagnet) to use magnetic induction to heat the catalytic reactor 102, such as to be within the predefined temperature range stated above. In some cases, the magnetic field may be generated by an electric current passing through the coil or the electromagnet. As an example, the heating device 114 can include a coil positioned adjacent to or around the housing of the catalytic reactor 102 to generate an alternating magnetic field (e.g., an alternating current (AC) magnetic field). The alternating magnetic field can oscillate at a predefined frequency with a magnetic field amplitude in a predefined range, such as from 10 millitesla (mT) to 100 mT (e.g., from 10 mT to 20 mT, from 20 mT to 30 mT, from 30 mT to 40 mT, from 40 mT to 50 mT, from 50 mT to 60 mT, from 60 mT to 70 mT, from 70 mT to 80 mT, from 80 mT to 90 mT, or from 90 mT to 100 mT). For example, the magnetic field amplitude of the alternating magnetic field can be 10 mT, 20 mT, 30 mT, 40 mT, 50 mT, 60 mT, 70 mT, 80 mT, 90 mT, 100 mT, or anywhere in between. In some implementations, the predefined frequency can range from 100 kHz to 400 kHz (e.g., from 100 kHz to 200 kHz, from 200 kHz to 300 kHz, or from 300 kHz to 400 kHz). As an example, the predefined frequency can be 100 kHz, 150 kHz, 200 kHz, 250 kHz, 300 kHz, 350 kHz, 400 kHz, or anywhere in between.

In some embodiments, the magnetic field amplitude described herein can correspond to a root-mean-square (RMS) amplitude. The RMS amplitude can correspond to an average signal amplitude determined based on a magnitude of an amplitude of a signal. In other words, the RMS amplitude can account for negative amplitudes and positive amplitudes of the signal. The alternating magnetic field can correspond to a magnetic field that has a magnetic field amplitude that can vary over time.

A power usage to generate the magnetic field can vary based on one or more factors, such as the predefined frequency or the magnetic field amplitude. For example, at a predefined frequency of 300 kHz, 1.5 kW may be used to generate a magnetic field having a magnetic field amplitude of 23.3 mT. As another example, at a predefined frequency of 100 kHz, 70 kW may be used to generate a magnetic field having a magnetic field amplitude of 23.6 mT. Accordingly, a lower predefined frequency can correspond to a higher power usage to provide a similar magnetic field amplitude.

Exposure to the alternating magnetic field can cause conductive compounds (e.g., the metallic nanoparticles of the metal-based catalyst 106) to dissipate heat, thereby enabling the decomposition reaction to occur within the predefined temperature range. The conductive compounds can include materials that are electrically conductive. The conductive compounds additionally may include magnetic materials. In some examples, the magnetic materials can have hysteretic properties when subjected to the alternating magnetic field, resulting in magnetically induced heating. Factors that may affect an amount of heat dissipated by hysteresis can include the predefined frequency, the magnetic field amplitude, or an amount of magnetization corresponding to the magnetic materials. Additionally or alternatively, the alternating magnetic field can generate one or more eddy currents in the conductive compounds, thereby heating the conductive compounds using resistive loss.

In some cases, a temperature reached by the catalytic reactor 102 or the metal-based catalyst 106 can have a direct relationship with the magnetic field amplitude. More specifically, the temperature can increase with an increase in the magnetic field amplitude. Accordingly, the temperature can be adjusted by modifying the magnetic field amplitude of the magnetic field provided by the heating device. In some cases, the heating device 114 can use magnetic induction to provide contactless heating. In other words, the heating device 114 can heat the catalytic reactor 102 without the coil or another heating element of the heating device 114 contacting the metal-based catalyst 106 or other components within the catalytic reactor 102.

The system 100 can include any other or additional suitable components. For example, the system 100 may include a computing device 116 communicatively coupled with the heating device 114 to adjust one or more parameters of the heating device, such as based on the temperature data 112 collected by the temperature sensor 110. The computing device 116 may be communicatively coupled with the temperature sensor 110 to monitor the temperature data 112 captured by the temperature sensor 110. Additionally, the computing device 116 can include a user interface or another suitable input/output device to receive user input to adjust the temperature of the catalytic reactor 102.

In some examples, the computing device 116 may implement feedback control or other suitable control techniques to adjust the magnetic field amplitude of the heating device 114 based on the temperature data 112. For example, the computing device 116 may receive a target temperature as part of the user input provided to the user interface. Based on the temperature data 112, the computing device 116 can determine that a current temperature of the catalytic reactor 102 is below the target temperature. Accordingly, the computing device 116 can output a control signal (e.g., a command) to the heating device 114 to indicate an increase or another suitable adjustment to the magnetic field amplitude to increase the temperature of the catalytic reactor 102. The computing device 116 may monitor the temperature data 112 to determine whether an updated temperature of the catalytic reactor 102 after implementing the increase to the magnetic field amplitude is consistent with the target temperature. The computing device 116 can iteratively adjust the magnetic field amplitude until the updated temperature is consistent with the target temperature.

In some examples, the system 100 can include a gas analyzer 118 (e.g., a continuous gas analyzer) that can analyze an outlet fluid flow 120 of the catalytic reactor 102 to determine a chemical composition of the outlet fluid flow 120. In some cases, the gas analyzer 118 can be positioned downstream from the catalytic reactor 102. The gas analyzer 118 may include a sampling unit that can remove a portion of the outlet fluid flow 120 as a representative sample to analyze and determine the chemical composition of the outlet fluid flow 120. The representative sample may undergo pretreatment prior to being analyzed by the gas analyzer. The gas analyzer 118 may employ any suitable analysis technique to analyze the outlet fluid flow 120 that exits from the catalytic reactor 102. Examples of the analysis technique can include optical spectroscopy, mass spectroscopy, chromatography, or a combination thereof. In some implementations, the system 100 may include more than one gas analyzer that can each perform a different analysis technique to determine a respective chemical composition, such as for validation or confirmation. For instance, if the gas analyzer 118 uses optical spectroscopy to determine the chemical composition, the system 100 can include another gas analyzer that can implement gas chromatography to confirm the chemical composition of the outlet fluid flow 120.

The system 100 additionally can include a separation module 122 that can receive the outlet fluid flow 120 outputted by the catalytic reactor 102. The separation module 122 can be a subsystem of the system 100 that can be positioned downstream from the catalytic reactor 102 to receive the outlet fluid flow 120. Once the separation module 122 receives the outlet fluid flow 120, the separation module 122 can separate or isolate a portion of the reaction products to generate a purified product 124 that can be provided as an input to another chemical process. More specifically, the separation module 122 can isolate a particular chemical compound of the outlet fluid flow 120 by removing other chemical compounds (e.g., impurities, byproducts, unreacted reactants, etc.) present in the outlet fluid flow 120. As used herein, impurities can refer to any chemical compound different from the particular chemical compound that is isolated to generate the purified product 124. For example, the separation module 122 can separate hydrogen from nitrogen, ammonia, or a combination thereof to provide a purified gaseous product as a gaseous fuel source to one or more fuel cells.

The separation module 122 may apply at least one separation method to generate the purified product 124. Examples of possible separation methods can include adsorption (e.g., pressure swing adsorption), membrane separation, cryogenic distillation, and the like. In particular, adsorption can involve an adhesion of the impurities in the outlet fluid flow 120 to a filter substrate (e.g., activated carbon, zeolite, or other suitable adsorbents). In some cases, the separation module 122 may be designed to prioritize removing ammonia from the outlet fluid flow 120, such as to prevent ammonia from damaging downstream equipment (e.g., fuel cells), since ammonia is corrosive. On the other hand, nitrogen is an inert gas that is generally unlikely to react with other chemical compounds or the downstream equipment.

In some examples, the separation module 122 may generate a waste stream in addition to the purified product 124. The waste stream can include the impurities removed by the separation module 122 from the outlet fluid flow 120, such as nitrogen and ammonia for an ammonia decomposition system. In some implementations, the waste stream may be discarded, deactivated, or otherwise removed from the system 100. For instance, nitrogen gas can be released to the atmosphere. In other implementations, certain chemical compounds in the waste stream may be recycled or reused in other parts of the system 100 or other suitable chemical processes. For instance, if the waste stream includes ammonia, another separation module (not pictured) may be positioned in the system 100 to receive the waste stream from the separation module 122 and isolate the ammonia from the waste stream. The ammonia isolated by the other separation module then can be provided as part of the feedstock 104 to undergo the decomposition reaction.

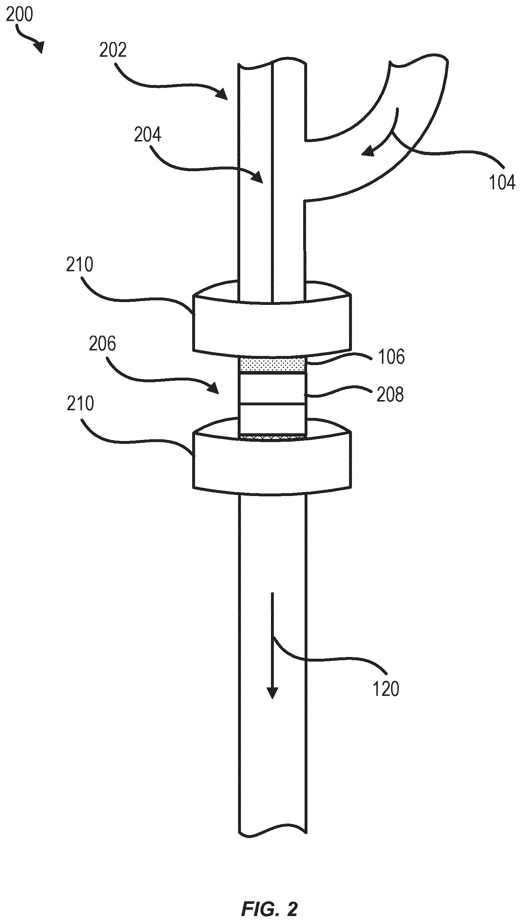

FIG. 2 is a schematic of an example catalytic reactor 200 heated using magnetic induction according to some examples of the present disclosure. Certain aspects of FIG. 2 are described below with reference to the components of FIG. 1 above. In some cases, the catalytic reactor 200 of FIG. 2 can correspond to the catalytic reactor 102 of FIG. 1. As shown in FIG. 2, the catalytic reactor 200 can include a housing 202 within which a thermocouple 204 and one or more chemical compounds are positioned. The thermocouple 204 can correspond to the temperature sensor 110 of FIG. 1. In some examples, the housing 202 may be produced from a nonconductive material, such as glass. The catalytic reactor 200 can include a catalyst bed 206 that can include one or more layers of a metal-based catalyst 106 and one or more layers of a heating agent 208 positioned in contact with the metal-based catalyst 106. As illustrated, the metal-based catalyst 106 and the heating agent 208 can be positioned in an alternating arrangement, for example such that layers of the metal-based catalyst 106 are separated by layers of the heating agent 208. In some cases, the alternating arrangement of the metal-based catalyst 106 and the heating agent 208 can promote distributed or even heating of the metal-based catalyst 106 in the catalytic reactor 200.

As illustrated in FIG. 2, the catalytic reactor 200 can include one or more coils 210 positioned around the housing 202 of the catalytic reactor 200. The coils 210 can be part of the heating device 114 of FIG. 1. More specifically, the coils 210 can generate a magnetic field, such as when an electric current passes through the coils 210. Although two coils 210 are depicted in FIG. 2, it will be appreciated that the heating device 114 may include any suitable number of coils. The metal-based catalyst 106 can include metallic nanoparticles that can increase in temperature in a presence of or when subjected to the magnetic field. Additionally or alternatively, the heating agent 208 can be produced using a magnetically receiving compound that can generate heat when in the presence of the magnetic field. Accordingly, the coils 210 can heat contents of the catalytic reactor 200 using magnetic induction, for example such that a temperature of the catalyst bed 206 is within a suitable temperature range to perform a decomposition reaction.

The catalytic reactor 200 can receive a feedstock 104 including an inorganic compound, such as via another piece of equipment coupled with the catalytic reactor 200. in some cases, the other piece of equipment may be a mixer, separator, tank, etc. As shown in FIG. 2, the catalytic reactor 200 may include one or more inlets, for example such that the thermocouple 204 and the feedstock 104 can be received separately by the catalytic reactor 200. The catalytic reactor 200 can receive the feedstock 104 as a fluid (e.g., a gas) that can flow in a downward direction (e.g., in the same direction as gravity) through the catalyst bed 206 of the catalytic reactor 200. The inorganic compound of the feedstock 104 can function as a reactant of the decomposition reaction. The decomposition reaction may yield one or more reaction products or subcomponents as products of the decomposition reaction. As described with respect to FIG. 1, the feedstock 104 can include ammonia gas that can decompose to form hydrogen gas and nitrogen gas.

Once the feedstock 104 passes through the catalyst bed 206, a fluid flow corresponding to the feedstock can form an outlet fluid flow 120. More specifically, a portion or all of the inorganic compound included in the feedstock 104 may have undergone the decomposition reaction to form the outlet fluid flow 120 that includes the reaction products. In some examples, the metal-based catalyst 106 may facilitate a complete decomposition (e.g., 100% conversion) of the inorganic compound. Conversion can indicate how much of a reactant (e.g., ammonia or another suitable inorganic compound) has reacted in the decomposition reaction. In some cases in which the decomposition of the inorganic compound is incomplete (e.g., a conversion of less than 100%), the outlet fluid flow 120 may include a portion of the inorganic compound that is unreacted. As described with respect to FIG. 1, the outlet fluid flow 120 can be received by a separation module 122 that can perform any suitable separation process to separate, purify, or isolate a subset of the reaction products. For example, if ammonia is the inorganic compound included in the feedstock 104, the separation module 122 may separate hydrogen from ammonia or nitrogen in the outlet fluid flow 120.

### Example 1 - Catalyst synthesis

### a. Synthesis of Ni-supported nanoparticles via an organometallic decomposition route

As an example, the Ni-supported nanoparticles were prepared by thermal decomposition of Ni(COD)₂ precursor in the presence of the catalyst support 108. Steps of the organometallic decomposition route to prepare the Ni-supported nanoparticles were performed in a Fischer-Porter (FP) bottle. A solution of the Ni(COD)₂ precursor (1.6 grams, containing 0.333 grams of Ni) in mesitylene (5 mL) was added to a solution of the catalyst support 108 (3 grams) in mesitylene (40 mL) in a glovebox to form a reaction mixture. The reaction mixture was stirred overnight at room temperature and then introduced in a 150 °C pre-heated oil bath for 1 hour, under argon atmosphere. A powder including the Ni-supported nanoparticles was collected by decantation and washed five times with 15 mL of toluene. Finally, the powder was dried under vacuum for 5 hours and stored inside the glovebox. Metal content determined by inductively coupled plasma atomic emission spectroscopy (ICP) was 8 wt. %.

### b. Synthesis of Ru-supported nanoparticles via an organometallic decomposition route

As an example, the Ru-supported nanoparticles were prepared by thermal decomposition of Ru(COD)(COT) precursor in the presence of the catalyst support 108. Steps of the organometallic decomposition route to prepare the Ru-supported nanoparticles were performed in an FP bottle. A solution of the Ru(COD)(COT) precursor (0.493 grams, containing 0.158 grams of Ru for 5 wt. % and 0.191 grams, containing 0.061 grams Ru for 2 wt. %) in THF (5 mL) was added to a solution of the catalyst support 108 (3 grams) in THF (40 mL) in a glovebox to form a reaction mixture. The reaction mixture was stirred for 24 hours at room temperature and then was pressurized with 3 bars of H₂ and stirred for 24 hours at room temperature. A powder including the Ru-supported nanoparticles was collected by decantation and washed five times using 15 mL of toluene. The powder then was dried under vacuum for 5 hours and stored inside the glovebox. The metal content of the powder determined by ICP was 3.3 wt. % for the 5 wt.% Ru and 1.5 wt. % for the 2 wt. % Ru.

### c. Synthesis of Ru-coated iron wool

The Ru-coated iron wool (1 wt. % in metal) was prepared by thermal decomposition of a Ru precursor in the presence of iron wool as the catalyst support 108. The thermal decomposition was performed in an FP bottle. A solution of the Ru(COD)(COT) precursor (0.038 grams, containing 0.012 grams of Ru) in THF (5 mL) was added to iron wool (1.2 grams) in THF (25 mL) in a glovebox to form a reaction mixture. The reaction mixture was stirred for 24 hours at room temperature and then was pressurized with 3 bars of H₂ and stirred for another 24 hours at room temperature to generate the Ru-coated iron wool. The Ru-coated iron wool was collected by magnetic attraction and washed five times with 15 mL of THF. The Ru-coated iron wool then was dried under vacuum for 2 hours and stored inside the glovebox.

### d. Synthesis of Ni-coated iron wool

The Ni-coated iron wool (1 wt. % in metal) was prepared by thermal decomposition of a Ni precursor in the presence of iron wool as the catalyst support 108. The thermal decomposition was performed in an FP bottle. As one example, a solution of the Ni precursor Ni(COD)₂ (0.057 grams, containing 0.012 grams of Ni) in mesitylene (5 mL) was added to iron wool (1.2 grams) in mesitylene (25 mL) in a glovebox to form a reaction mixture. The reaction mixture was stirred overnight at room temperature and then pressurized with 3 bars of H₂ and stirred for another 24 hours at room temperature to generate the Ni-coated iron wool. The Ni-coated iron wool was collected by magnetic attraction and washed five times using 15 mL of toluene. The Ni-coated iron wool then was dried under vacuum for 2 hours and stored inside the glovebox.

As another example, when a Ni amide precursor was employed, a solution of Ni{MeC(N*i*Pr)₂}₂ (0.070 grams, containing 0.012 grams of Ni) in 5 mL of anisole was added to the iron wool in 25 mL anisole to generate another reaction mixture. The FP bottle containing the other reaction mixture was pressurized with 3 bars of H₂ and heated in a 110 °C pre-heated oil bath for 2 hours to generate the Ni-coated iron wool. The Ni-coated iron wool was separated by magnetic attraction and washed five times using 15 mL of toluene. The Ni-coated iron wool then was dried under vacuum for 2 hours and stored inside the glovebox.

### e. Synthesis of silica coated iron wool

A silica (SiO₂) coating of iron wool can be obtained through a sol-gel approach of hydrolysis-polycondensation of tetraethyl orthosilicate (TEOS) in a presence of the iron wool such that solid materials are produced from small molecules. The sol-gel approach can involve converting monomers in solution into a colloidal solution that can function as a precursor to an integrated network of particles or polymers. The silica coating can function as a protective coating of the iron wool to protect a metal-based catalyst 106. As an example, 10 grams of iron wool was placed in a 500 mL round bottom flask. Isopropanol (320 mL) followed by 32 mL of TEOS were added to the round bottom flask to form a mixture. The mixture was stirred for 10 minutes. Hydrolysis began upon adding 8 mL of NH₄OH solution as a catalyst. Contents of the round bottom flask were agitated for 7 hours with an overhead stirrer at room temperature. Then, the solution (e.g., compounds in liquid form) remaining in the round bottom flask was discarded. A washing process was performed five times. An iteration of the washing process involved washing the iron wool using 150 mL of isopropanol. Any leftover or residual isopropanol was evaporated overnight at room temperature. After a final washing of the last iteration, the silica coated iron wool was placed for 1 hour in an oven heated to 100°C to ensure complete evaporation of isopropanol. After being heated in the oven, the silica coated iron wool was annealed under an argon flow using magnetic induction with a magnetic field set to 6 mT to reach a temperature of 400°C, which was held for 5 hours.

### f. Synthesis of iron wool coated with Ni and silica

As an example, a solution of the Ni(COD)₂ precursor (0.057 grams, containing 0.012 grams of Ni) in mesitylene (5 mL) was added to silica coated iron wool (1.2 grams) in mesitylene (25 mL) in a glovebox to form a reaction mixture. The silica coated iron wool was prepared as described above. The reaction mixture was stirred overnight at room temperature and then pressurized with 3 bars of H₂ and stirred for another 24 hours at room temperature. The iron wool thus obtained was collected by magnetic attraction and washed five times using 15 mL of toluene. The iron wool then was dried under vacuum for 2 hours and stored inside the glovebox.

### g. Synthesis of iron wool coated with Ru and silica

As an example, a solution of the Ru(COD)(COT) precursor (0.038 grams, containing 0.012 grams of Ru) in THF (5 mL) was added to silica coated iron wool (1.2 g) in THF (25 mL) in a glovebox to form a reaction mixture. The silica coated iron wool was prepared as described above. The reaction mixture was stirred for 24 hours at room temperature and then was pressurized with 3 bars of H₂ and stirred for another 24 hours at room temperature. The iron wool thus obtained was collected by magnetic attraction and washed five times using 15 mL of THF. The iron wool then was dried under vacuum for 2 hours and stored inside the glovebox.

### Example 2 - Catalyst characterization

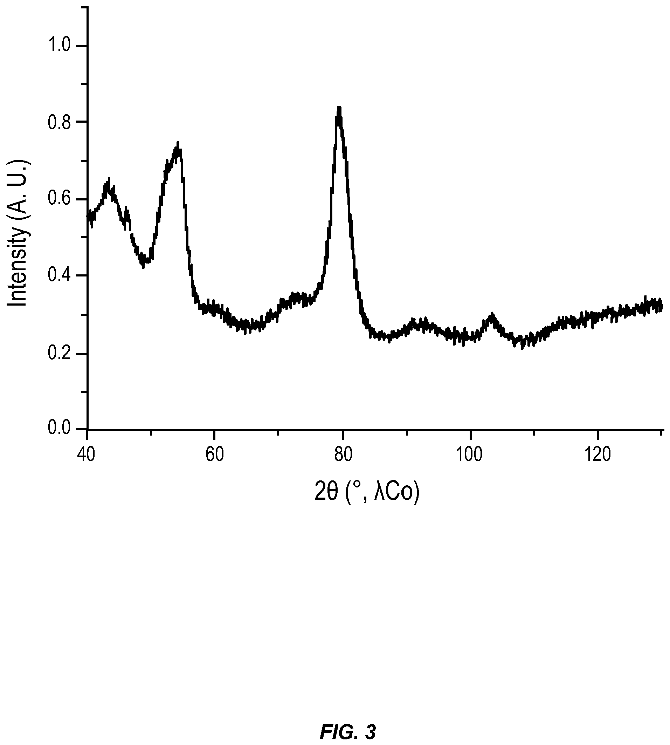

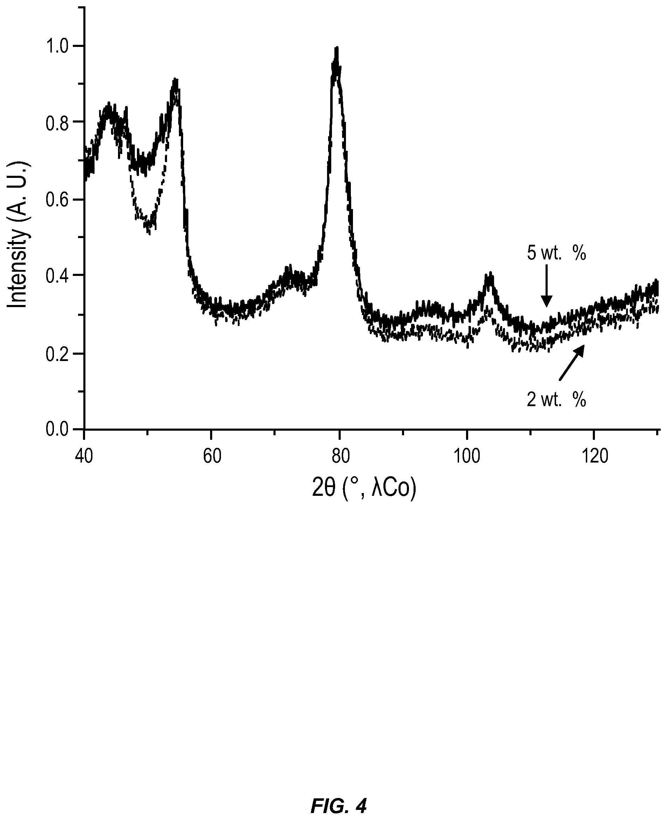

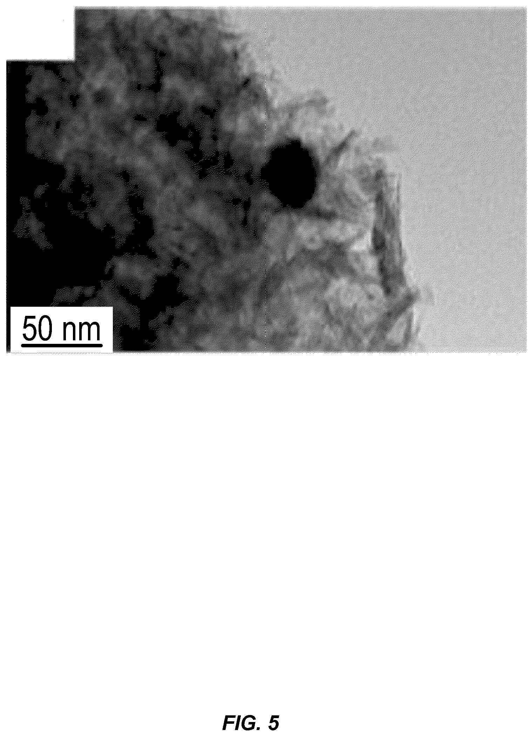

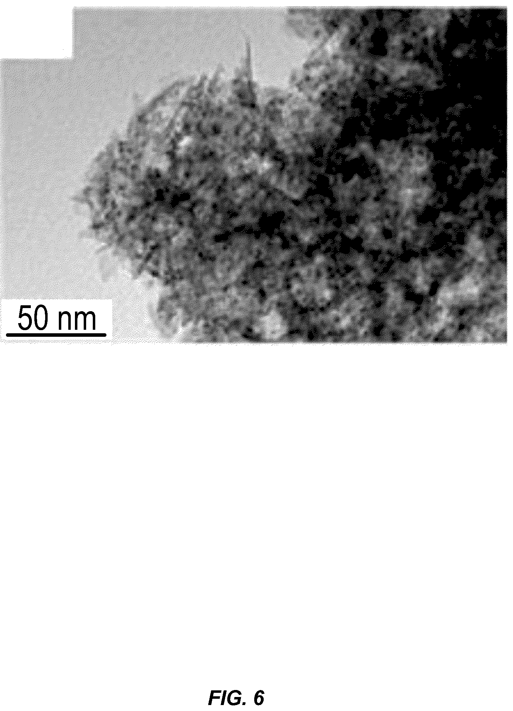

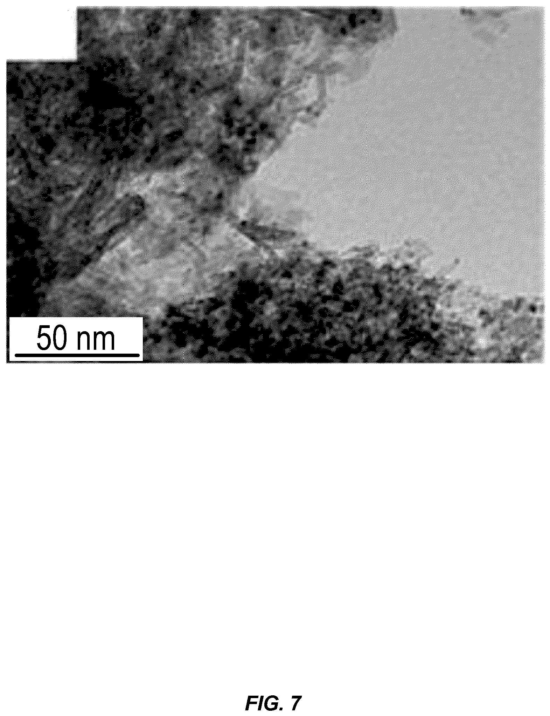

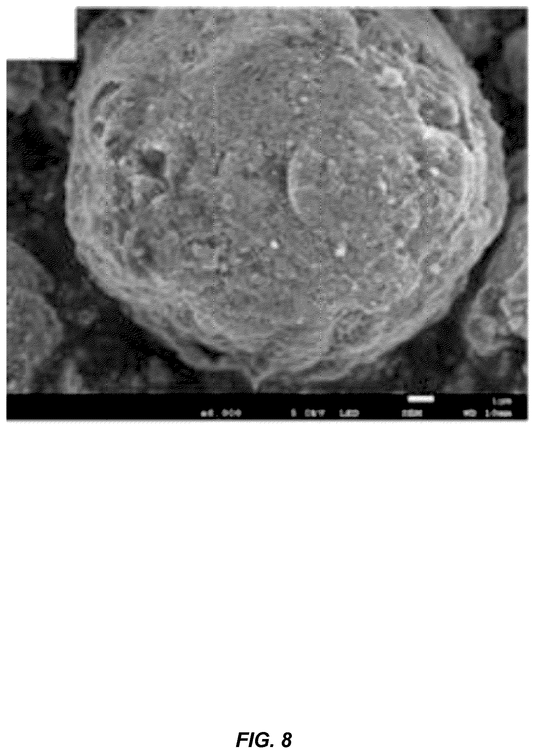

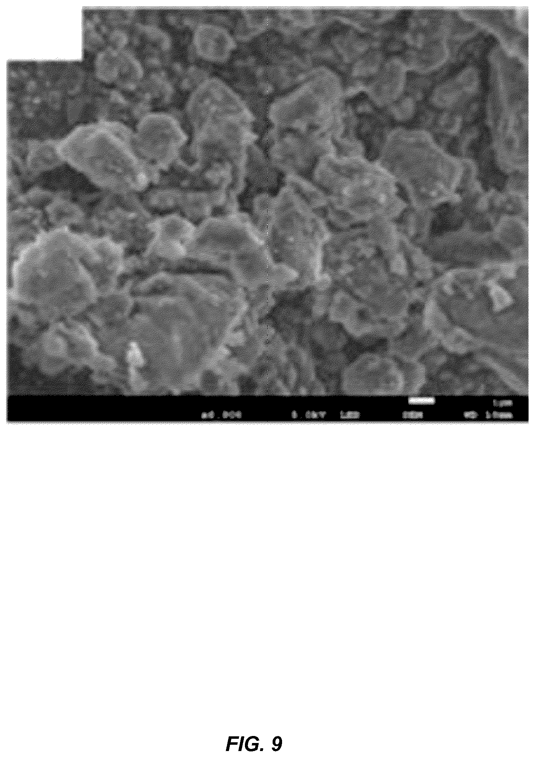

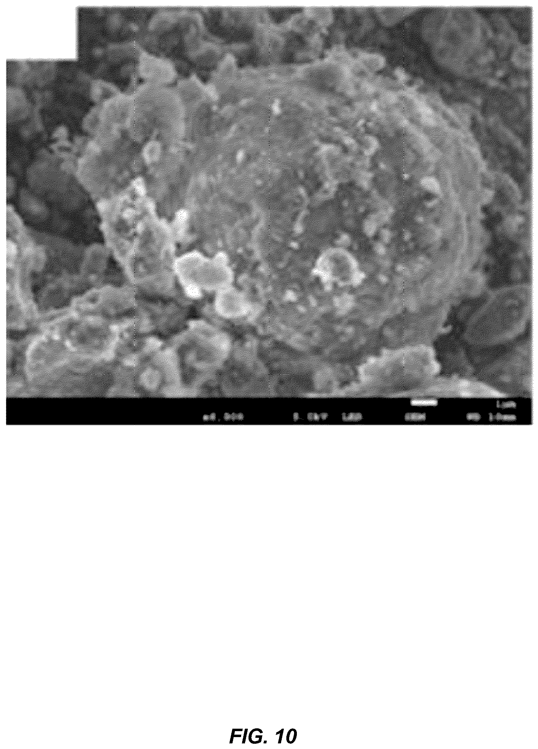

Powder x-ray diffraction (XRD) patterns were recorded using a diffractometer (Co source, K_{α}, 1.79 Å). Scanning electron microscopy (SEM) imaging was carried out using a Schottky field emission scanning electron microscope with a field emission gun (FEG) source. SEM with energy dispersive x-ray analysis (EDX) elemental mapping was carried out with an EDS detector attached to the scanning electron microscope. Elemental analysis of metals was performed via an inductively coupled plasma atomic emission spectroscopy (ICP-AES) method using an ICP spectrometer. Microscopy samples were prepared by depositing a drop of a diluted colloidal solution on a carbon-coated copper grid. The samples were observed on a transmission electron microscopy (TEM) microscope equipped with a tungsten filament and with an operating voltage of 120 kV. In all cases, size histograms were determined by a manual counting process over 100 particles using imaging software. Size distributions were fitted by Gaussian law, enabling a calculated of a mean size and a standard deviation σ. Examples of XRD, TEM, and SEM results are given in FIGS. 3-10.

### Example 3 - Ammonia decomposition by iron wool catalysts in presence of magnetic induction

Three types of iron wool catalysts were prepared and tested with respect to ammonia decomposition with magnetic induction heating as generally described herein. The three types of the iron wool catalysts included thin iron wool (e.g., super fine iron wool or 0000# grade iron wool), thick iron wool (e.g., fine iron wool or 0# grade iron wool), and silica coated iron wool. Thickness of the iron wool catalysts can range from 40 µm to 300 µm. As an example, 500 milligrams (mg) of iron wool were loaded into a catalytic reactor 200 and pressed to reach a 1 centimeter (cm) catalytic bed in the catalytic reactor 200. In this example, the catalytic reactor 200 corresponds to a quartz reactor. The catalytic reactor 200 was coupled with an upper part of an inlet head where a quartz tube was positioned to receive a temperature sensor 110 (e.g., a temperature probe). The catalytic reactor 200 then was coupled with a lower part of an outlet and centered with respect to a magnetic coil 210. All manipulations or steps were performed in air. An inlet gas cable and an outlet gas cable were coupled with the catalytic reactor 200. Ammonia was purged through the catalytic reactor 200 for approximately 15 minutes. Varying magnitudes of a magnetic field amplitude were applied for various amounts of time. Table 1 below indicates ammonia decomposition results obtained with the three types of the iron wool catalysts. A flow rate of 150 mL min⁻¹ corresponded to a volumetric flow rate (e.g., a gas hourly space velocity (GHSV)) of 30,000 mLg_{cat}⁻¹h⁻¹.

**Table 1. Ammonia decomposition in presence of uncoated iron wool or silica coated iron wool**

| Catalyst | Magnetic field (mT) | Flow rate (mLmin⁻¹) | Time (minutes) | Temperature (°C) | Conversion (%) |
|---|---|---|---|---|---|
| Thin iron wool | 17.6 | 150 | 41 | 485 | 100 |
| Thin iron wool | 13 | 150 | 3 | 450 | 33 |
| Thick iron wool | 17.6 | 150 | 35 | 670 | 100 |
| Thick iron wool | 13 | 150 | 10 | 510 | 59 |
| Silica coated iron wool | 23.3 | 150 | 34 | 670 | 100 |

As indicated in Table 1, the thin iron wool requires a magnetic field amplitude of 17.6 mT to achieve full ammonia decomposition (e.g., 100% conversion). By lowering the magnetic field amplitude to 13 mT, a maximum conversion of 33% was obtained.

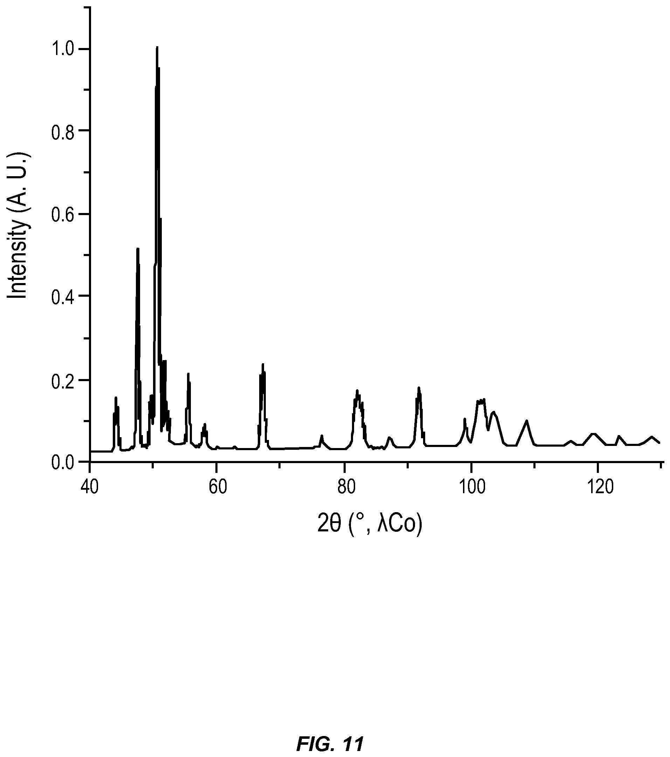

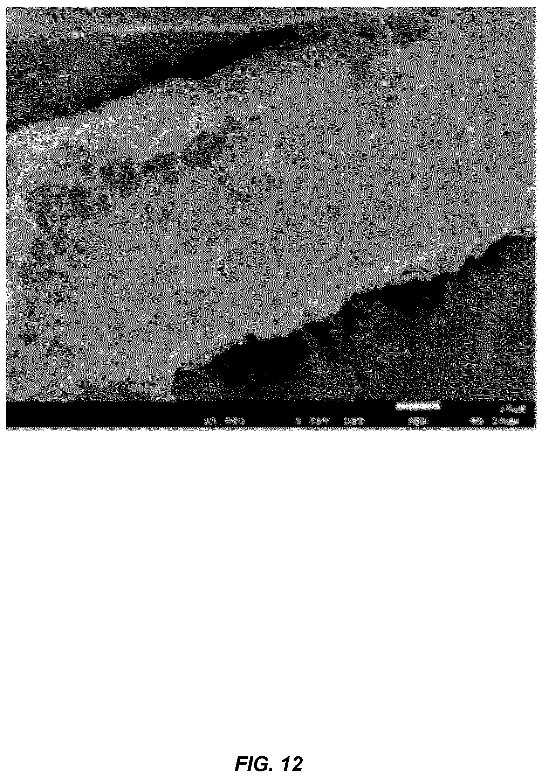

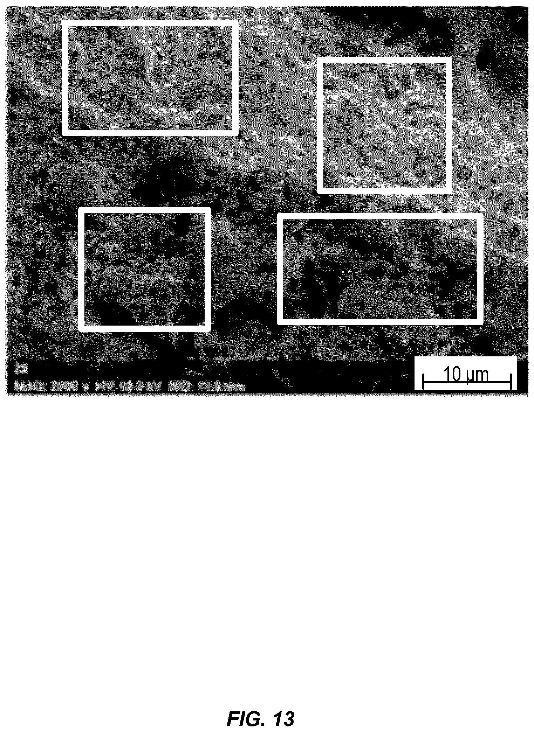

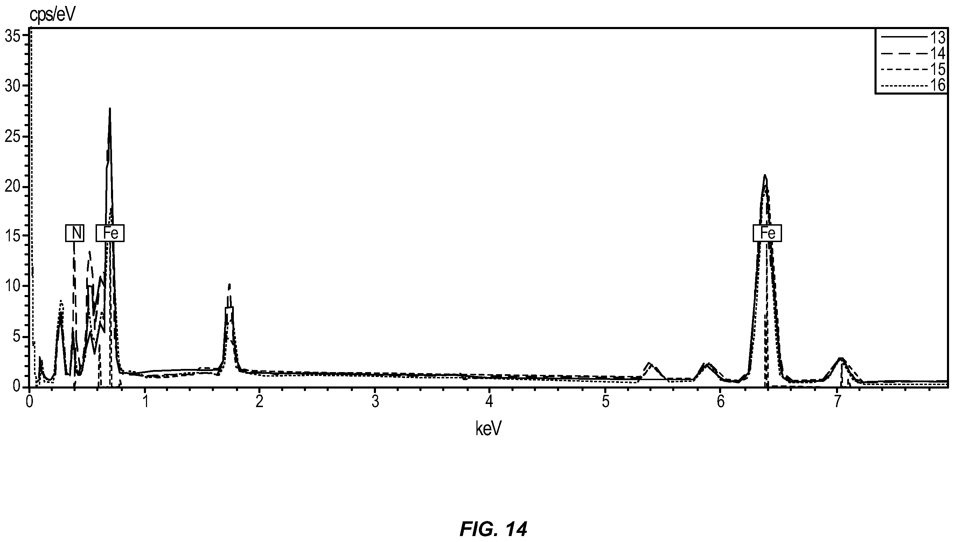

The three types of the iron wool catalysts were also tested with respect to recyclability and stability. These tests were performed using a magnetic field amplitude of 17.6 mT. Results of the testing indicated that the iron wool maintains its full catalytic activity throughout a stability test with a duration of 9 hours at a constant temperature of 500 °C. More specifically, the iron wool catalysts exhibited no loss in catalytic activity. As for the recyclability performance, it was observed that the iron wool catalysts start losing catalytic activity in a sixth run, with a decrease of 5% with respect to ammonia conversion. The decrease in conversion was also accompanied by a decrease in a reaction temperature, from 485 °C in a first run to 430 °C in the last run. This decrease in temperature and activity can be assigned to an in-situ formation of iron nitride species, which was corroborated by XRD and SEM-EDX characterization. An XRD pattern shown in FIG. 11 of an iron wool catalyst after six runs at a magnetic field amplitude of 17.6 mT included a mixture of Fe and FeₓN (where x = 2 and 3). A presence of the iron nitride species was also confirmed by SEM-EDX. In particular, by SEM, a modification of a surface of the iron wool catalysts was visible and by EDX, a ratio of Fe₇₂N₂₈ was detected (FIGS. 12-14).

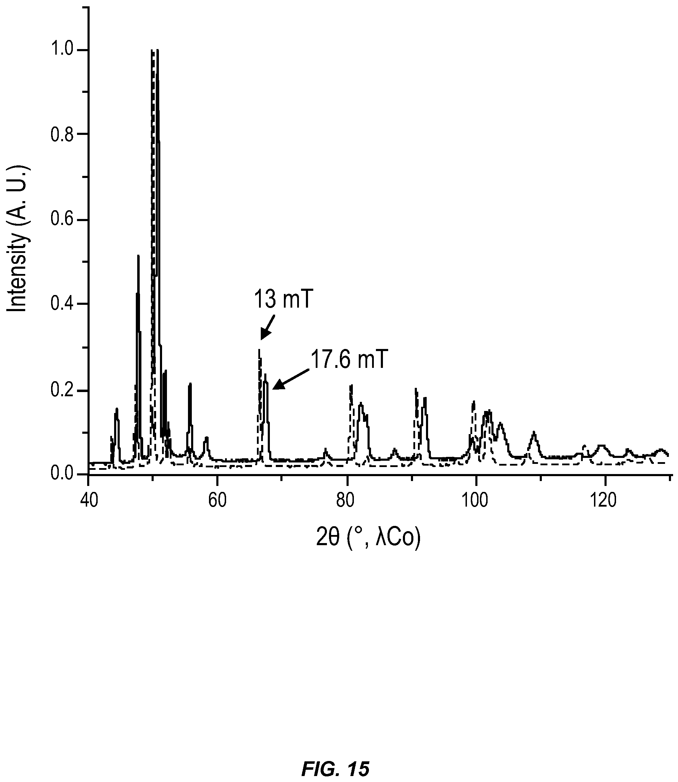

Recycling tests were also performed using thin iron wool with a magnetic field amplitude of 13 mT, for the same duration and the same number of runs as the 17.6 mT catalysis was performed. As shown in FIG. 15, the XRD pattern of the iron wool catalysts after the sixth catalytic run was registered, which also revealed formation of iron nitride (Fe₂N). A temperature difference of 30 ºC was determined between two magnetic field amplitudes for the first catalytic run (e.g., 485 °C for 17.6 mT and 450 °C for 13 mT) and of 50°C for the last catalytic run (430 °C for 17.6 mT and 380 °C for 13 mT).

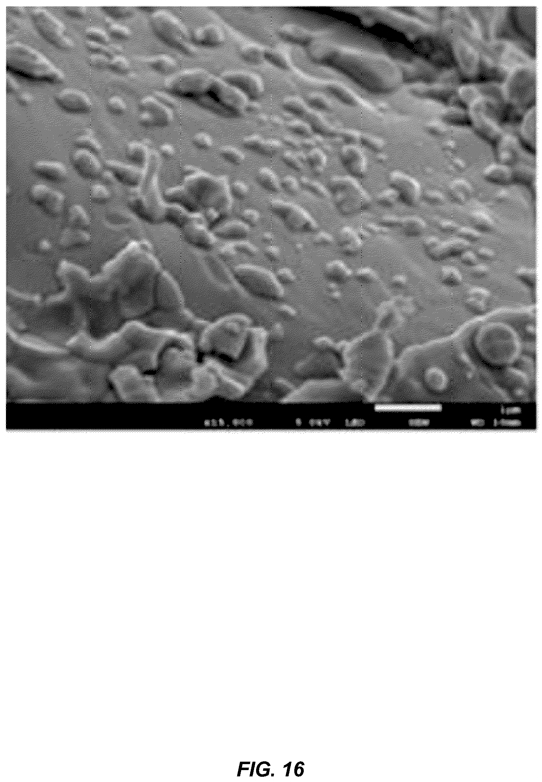

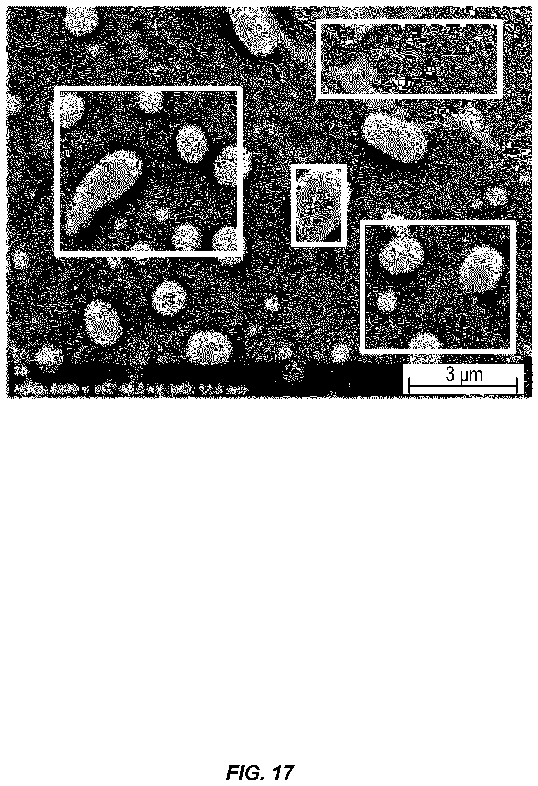

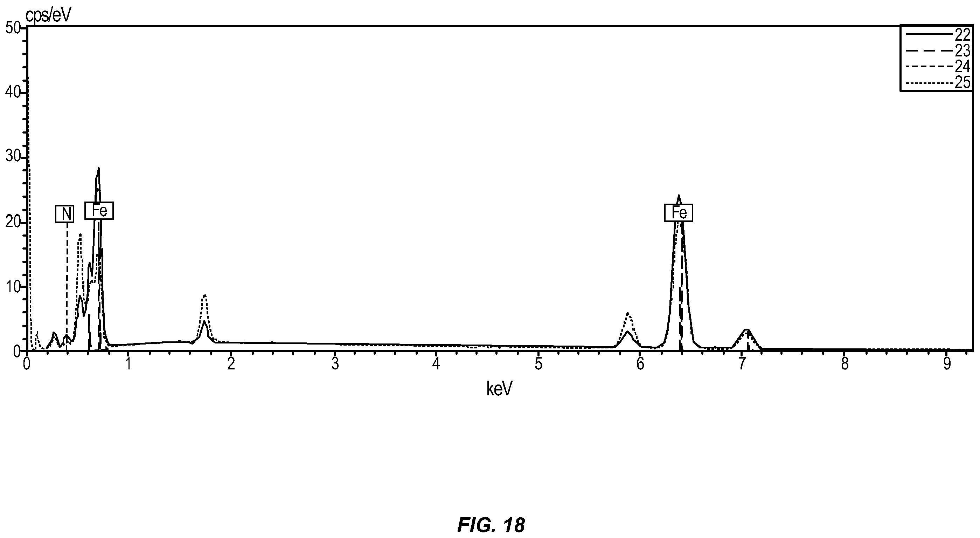

To prevent a deactivation of the iron wool catalysts through the formation of iron nitride, a protection of a surface of the iron wool catalysts was implemented by covering the iron wool catalysts with silica to prepare silica coated iron wool catalysts. As shown in Table 1, the catalytic test on the silica coated iron wool catalysts revealed the use of 23.3 mT to achieve 100% conversion. Recyclability tests were performed and confirmed that the silica protects the surface of the iron wool catalysts against nitration. Accordingly, the silica coated iron wool catalysts maintain their full activity throughout multiple catalytic runs (e.g., seven or more runs). The XRD and SEM-EDX analyses were performed. Both techniques revealed that the silica coated iron wool catalysts also suffered from surface deactivation by iron nitride formation, though in a lesser extent when compared to uncoated iron wool catalysts (Fe₉₁N₉ ratio by EDX, FIGS. 16-18). The temperature remained stable around 640 °C to 670 °C throughout the testing of the silica coated iron wool catalysts.

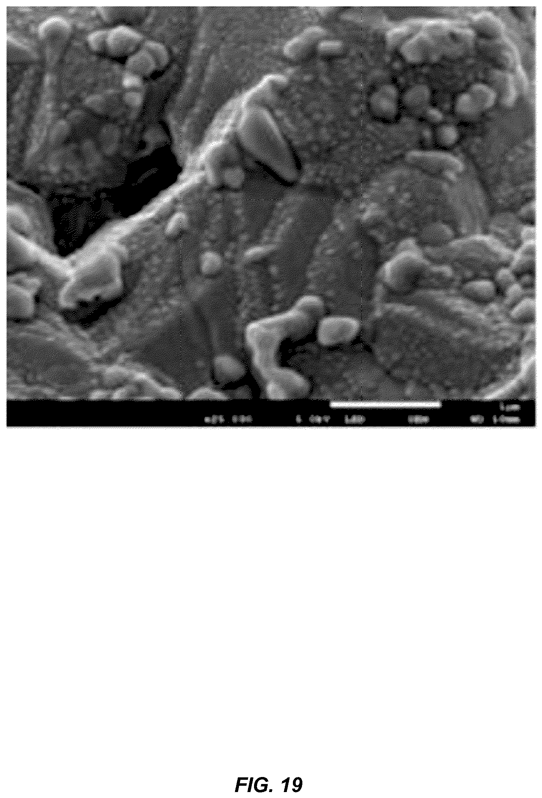

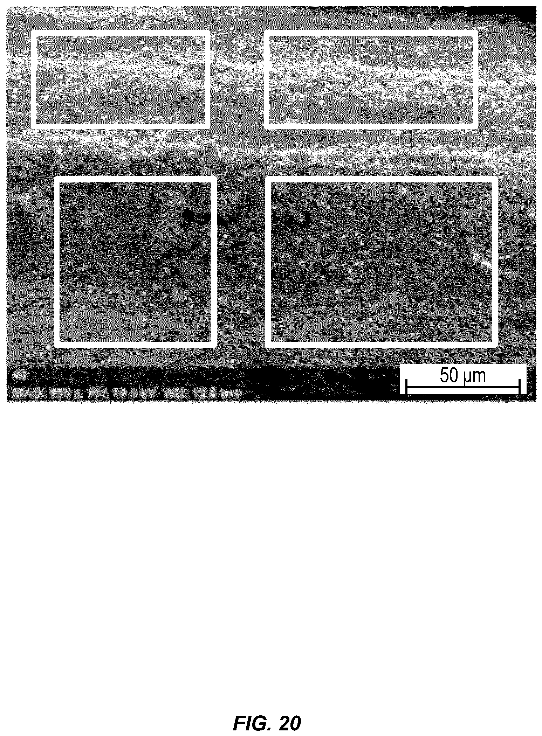

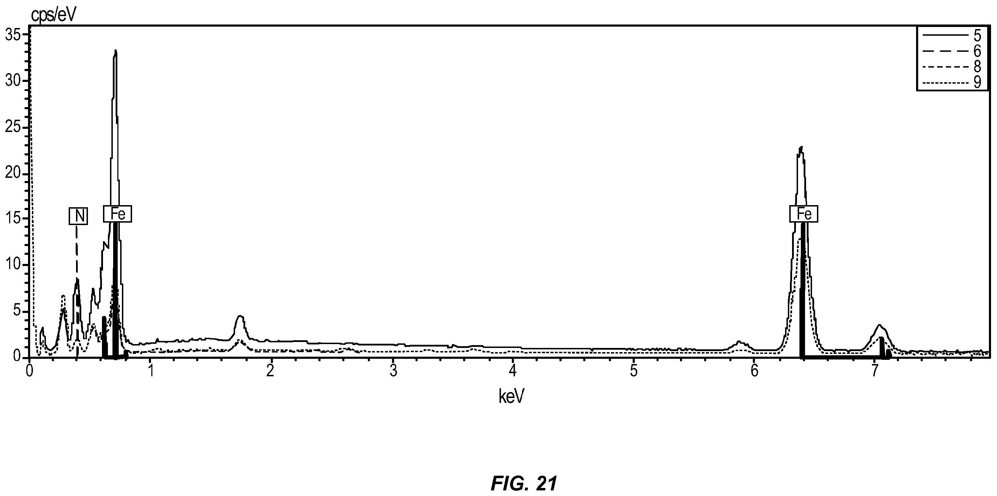

Thick iron wool was also studied with respect to functioning as a metal-based catalyst 106 in ammonia decomposition. The thick iron wool achieved 100% ammonia conversion at 17.6 mT in 35 minutes. It was observed that the thick iron wool remained stable throughout the recycling tests (10 runs) performed at the same magnetic field amplitude (17.6 mT). The XRD and SEM-EDX characterization of the thick iron wool also revealed a formation of iron nitride. The SEM-EDX characterization shown in FIGS. 19-21 revealed a Fe₈₄N₁₆ ratio, which correlated to an average amount of iron nitride formation when comparing all three types of the iron wool catalysts investigated in Example 3. In particular, an amount of nitride formation increased in an order of the three types of the iron wool catalysts such that the silica coated iron wool exhibited the least nitride formation and the thin iron wool exhibited the most nitride formation. Although there was a decrease in temperature of approximately 80°C, a catalytic activity of the thick iron wool remained unchanged during testing. Accordingly, in some cases, the thick iron wool provides suitable energy efficiency and stability for further consideration due to affording 100% conversion of ammonia at 17.6 mT in 35 minutes while remaining stable throughout 10 runs.

### Example 4 - Ammonia decomposition in presence of magnetic induction by iron wool coated with catalytic metal

Five types of coated iron wool catalysts were investigated with respect to magnetically induced ammonia decomposition. The coated iron wool catalysts included iron wool coated with Ni(COD)₂, iron wool coated with Ni(AMD)₂, iron wool coated with Ru(COT)(COD), iron wool coated with silica and further coated with Ni(COD)₂, and iron wool coated with silica and further coated with Ru(COT)(COD). The iron wools discussed herein functioned both as a heating agent 208 and as a metal-based catalyst 106.

As an example of an experimental setup, 500 mg of coated iron wool was loaded into a catalytic reactor 200 and pressed to reach a 1 cm catalytic bed. In this example, the catalytic reactor 200 corresponded to a quartz reactor. The catalytic reactor 200 was coupled with an upper part of an inlet head where a quartz tube was positioned to receive a temperature sensor 110 (e.g., a temperature probe). The catalytic reactor 200 then was coupled with a lower part of an outlet and centered with respect to a magnetic coil 210. All manipulations or steps were performed in air. An inlet gas cable and an outlet gas cable were coupled with the catalytic reactor 200. Ammonia was purged through the catalytic reactor 200 for approximately 15 minutes. Varying magnitudes of a magnetic field amplitude were applied for various amounts of time. Table 2 below indicates ammonia decomposition results obtained with the five types of the coated iron wool catalysts.

**Table 2. Ammonia decomposition in presence of iron wool coated with 1 wt. % of a catalytic metal (Ni or Ru)**

| Coating | Magnetic field (mT) | Flow rate (mLmin⁻¹) | Time (minutes) | Temperature (°C) | Conversion (%) |
|---|---|---|---|---|---|
| NiCOD | 23.3 | 150 | 7 | 650 | 100 |
| NiAMD | 17.6 | 150 | 7 | 520 | 100 |
| Ru | 23.3 | 150 | 6 | 700 | 100 |
| Silica and Ni | 23.3 | 150 | 25 | 480 | 77 |
| Silica and Ru | 23.3 | 150 | 20 | 500 | 98 |

All coated iron wool catalysts required medium magnetic field amplitudes (e.g., 17.6 mT) to high magnetic field amplitudes (e.g., 23.3 mT) to reach relatively high ammonia conversions, such as above 70% conversion. As shown in Table 2, the Ni and Ru coated iron wool catalysts reached 100% conversion relatively quickly (e.g., 7 minutes or less), while the coated iron wool catalysts with silica exhibited lower conversions.

The NiCOD-coated iron wool catalyst remained stable during recycling tests of seven catalytic runs. Additionally, a temperature of the Ni-coated iron wool catalyst remained constant throughout the recycling tests. The NiAMD-coated iron wool catalyst suffered some loss of catalytic activity in a seventh catalytic run, as demonstrated by a decrease to 97% conversion and a decrease of almost 80 °C in temperature from a first catalytic run to a final catalytic run. The Ru-coated iron wool catalyst remained stable throughout eight catalytic runs.

The silica coated iron wool catalysts were further coated with Ni and Ru to increase catalytic activity and to decrease a magnetic field amplitude employed, such as to 23.3 mT. Catalytic tests were performed on both silica coated iron wool catalysts. As shown in Table 2, the catalytic tests indicated that the same magnetic field amplitude of 23.3 mT resulted in longer reaction times to reach maximal conversions for the silica coated iron wool catalysts compared to the coated iron wool catalysts without silica. In other words, the coated iron wool catalysts without silica enabled faster reaction rates compared to the silica coated iron wool catalysts described in Example 4.

### Example 5 - Ammonia decomposition in presence of magnetic induction by iron wool mixed with a nickel catalyst

Catalytic tests were performed using three types of Ni-containing catalysts. In contrast to the testing of Examples 3 and 4, iron wool described in Example 5 functioned as a heating agent 208. A metal-based catalyst 106 tested in Example 5 included Ni nanoparticles loaded at 10 wt. % on oxide supports (e.g., silica-alumina oxides, aluminum oxides, or titanium dioxides).

As an example of experimental conditions, 500 mg of iron wool was mixed with 300 mg of the metal-based catalyst 106 to form a solid mixture. The solid mixture was loaded into a catalytic reactor 200 (e.g., a quartz reactor) and pressed to reach a 15 millimeter (mm) catalytic bed. The catalytic reactor 200 was coupled with an upper part of an inlet head, where a quartz tube was positioned to receive a temperature probe. The catalytic reactor 200 was then removed from a glovebox and immediately coupled with a lower part of an outlet and centered with respect to a magnetic coil. An inlet cable and an outlet cable were coupled with the catalytic reactor 200. Ammonia then was purged through the catalytic reactor 200 for a duration of approximatively 15 minutes. Varying magnitudes of a magnetic field amplitude was applied for various amounts of time. Table 3 below indicates ammonia decomposition results obtained with the three types of the Ni-containing catalysts.

**Table 3. Ammonia decomposition in presence of iron wool (heating agent) and a Ni-containing catalyst with oxide supports**

| Oxide Support | Magnetic field (mT) | GHSV (mLg_{cat}⁻¹h⁻¹) | Time (minutes) | Temperature (°C) | Conversion (%) |
|---|---|---|---|---|---|
| Silica-alumina oxide (SiRAlOx) | 13 | 19000 | 31 | 440 | 100 |
| Silica-alumina oxide (SiRAlOx) | 17.6 | 30000 | 6 | 450 | 100 |
| Silica-alumina oxide (SiRAlOx) | 23.3 | 50000 | 11 | 570 | 100 |
| Alumina oxide (Al₂O₃) | 13 | 30000 | 30 | 510 | 100 |
| Titanium dioxide (TiO₂) | 23.3 | 30000 | 50 | 450 | 100 |

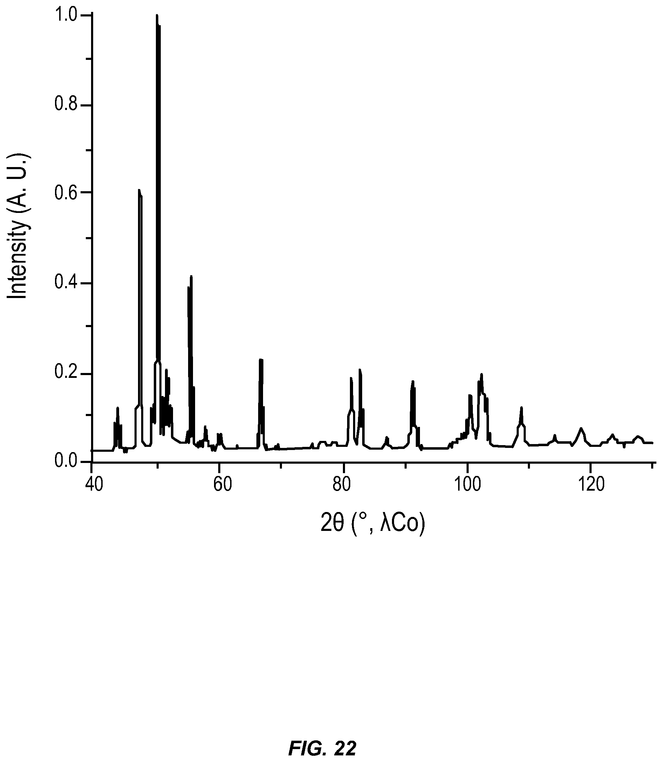

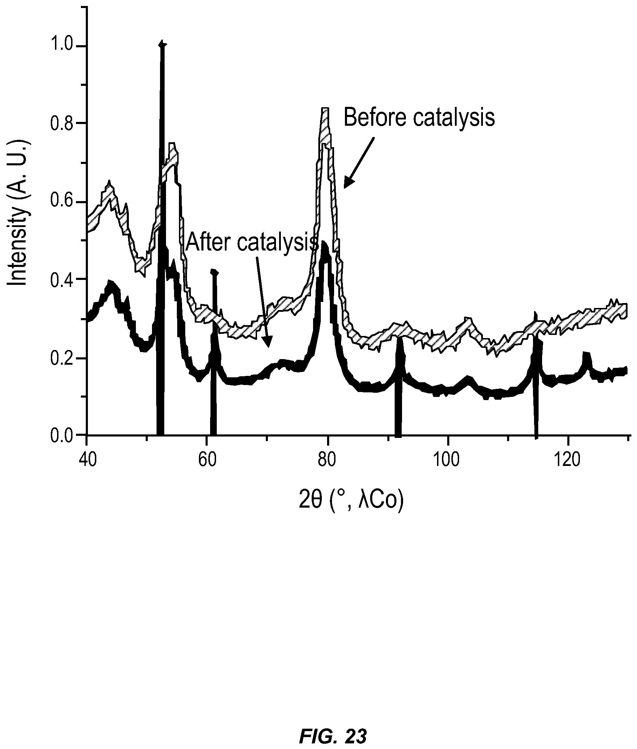

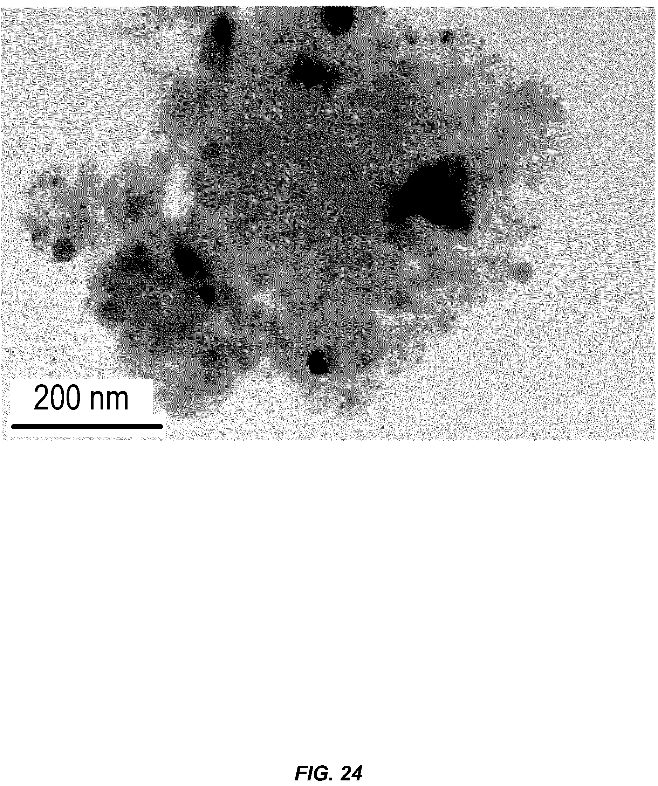

As shown in Table 3, the SiRAlOx-supported catalyst achieved 100% conversion of ammonia at a magnetic field amplitude of 17.6 mT. Recycling tests were performed and revealed a lack of stability of the SiRAlOx-supported catalyst. In particular, the SiRAlOx-supported catalyst exhibited a loss in catalytic activity starting with a fifth cycle and achieved 64% conversion in a seventh catalytic cycle. As indicated above, a loss of catalytic activity can be associated with a loss in heating power. With respect to the SiRAlOx-supported catalyst, a temperature decrease of 100°C was exhibited when comparing a first catalytic cycle to a last catalytic cycle. As determined by XRD and shown in FIG. 22, the temperature decrease is associated with a formation of iron nitride. Furthermore, the loss of catalytic activity of the SiRAlOx-supported catalyst as determined using the recycling tests may also result from a sintering of the Ni nanoparticles loaded on the SiRAlOx support. Sintering can refer to a process of compacting or forming a solid mass of material by pressure or heat without melting or liquefying chemical compounds into a liquid form. This was revealed by XRD (FIG. 23), where a diffraction pattern presented peaks corresponding to fcc-Ni after catalysis, and by TEM (FIG. 24), where an agglomeration of the Ni nanoparticles was observed. fcc-Ni refers to a face-centered cubic (fcc) crystal structure of the SiRAlOx-supported catalyst.

When the catalytic tests were performed at different flow rates of ammonia, it was revealed that for a smaller or slower ammonia flow (e.g., 95 mLmin⁻¹ or 19,000 mLg_{cat}⁻¹h⁻¹) the Ni-containing catalysts required a smaller magnetic field amplitude (e.g., 13 mT) to achieve 100% conversion. As shown in Table 3, longer reaction times (e.g., 31 minutes) were also needed to achieve 100% conversion. On the contrary, as shown in Table 3, when the ammonia flow was increased to 250 mL min⁻¹ or 19,000 mLg_{cat}⁻¹h⁻¹, the increased ammonia flow corresponded to a higher amplitude of 23.3 mT.

The catalytic tests were performed with Ni-containing catalysts synthesized on different catalyst supports to investigate an effect of the catalyst supports on the decomposition reaction. Generally, the ammonia decomposition involved a presence of basic (e.g., a pH greater than 7) sites on the catalyst support, as ammonia being basic can render easier absorption on an acidic support. An order of acidity of the catalyst supports tested in Example 5 is as follows: SiRAlOx - Al₂O₃ - TiO₂. The Al₂O₃-supported catalyst corresponded to a lower magnetic field amplitude (e.g., 13 mT) to achieve 100% conversion, though reaction time to full conversion increased. Additionally, as shown in Table 3, a reaction temperature was higher compared to the SiRAlOx-supported catalyst. An induction time of 4 minutes was observed for the Al₂O₃-supported catalyst. On the other hand, as shown in Table 3, the TiO₂-supported catalyst corresponded to both a higher magnetic field amplitude (e.g., 23.3 mT) and a higher reaction time (e.g., 50 min) to reach full ammonia conversion (e.g., 100% conversion). Accordingly, in some examples, the SiRAlOx-supported catalyst and Al₂O₃-supported catalyst enables faster reaction times at lower reaction temperatures to attain 100% conversion of ammonia compared to the TiO₂-supported catalyst.

### Example 6 - Ammonia decomposition in presence of magnetic induction by iron wool mixed with ruthenium catalysts

With respect to Example 6, catalytic tests were performed using iron wool as a heating agent 208, while a metal-based catalyst 106 tested using the catalytic tests included Ru nanoparticles loaded at 5 wt. % or 2 wt. % on silica-alumina oxides (SiRAlOx). Experimental conditions of the catalytic tests performed for Example 6 followed a similar procedure outlined above with respect to Example 5 using Ru-containing catalysts instead of Ni-containing catalysts. Table 4 below indicates ammonia decomposition results obtained with the Ru-containing catalysts. An ammonia flow rate of 150 mLmin⁻¹ was provided to test each Ru-containing catalyst.

**Table 4. Ammonia decomposition in presence of iron wool (heating agent) and a Ru-containing catalyst with oxide supports using magnetic induction at 300 kHz**

| Metal Loading (wt. %) | Heating Agent | Magnetic field (mT) | Power (W) | Time (minutes) | Temperature (°C) | Conversion (%) |
|---|---|---|---|---|---|---|
| 5 | Iron wool | 23.3 | 13 | 16 | 600 | 100 |
| 5 | Iron wool coated with silica | 17.6 | 13 | 16 | 530 | 100 |
| 2 | Iron wool | 23.3 | 13 | 20 | 550 | 100 |
| 2 | Iron wool coated with silica | 23.3 | 13 | 23 | 530 | 100 |

The Ru-containing catalysts corresponding to the results shown in Table 4 were stable throughout recycling tests with little to no loss of catalytic activity for ten catalytic runs. Furthermore, a reaction temperature registered by a temperature sensor 110 remained stable with minor differences (e.g., approximately 30°C) between a first catalytic run and a last catalytic run. In addition to being stable, the Ru-containing catalysts achieved 100% conversion at the lowest magnetic field amplitude (e.g., 13 mT) tested in Examples 3-6 and in a relatively short period of time (e.g., 16 to 23 minutes).

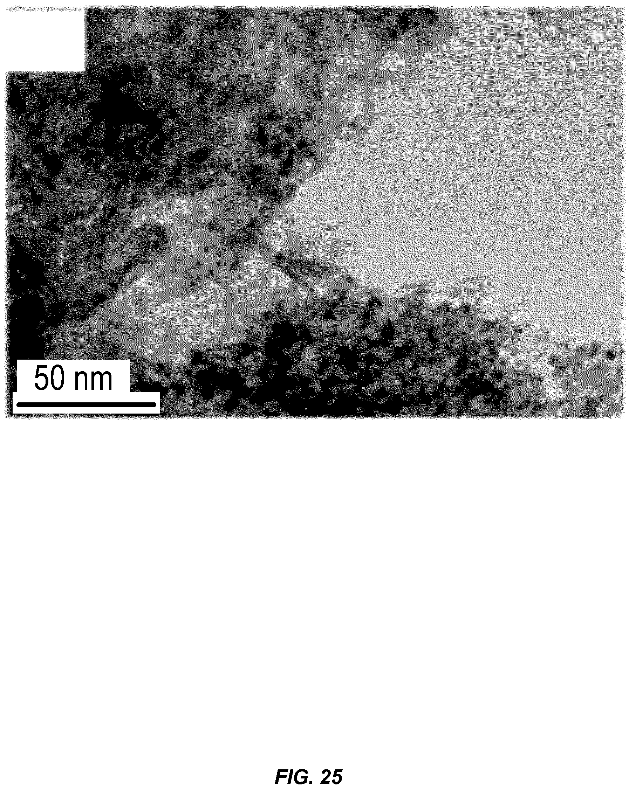

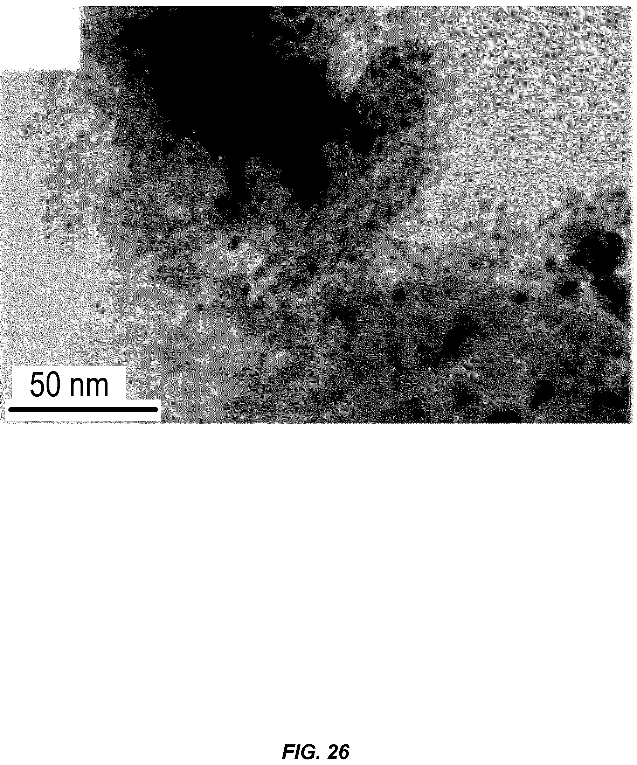

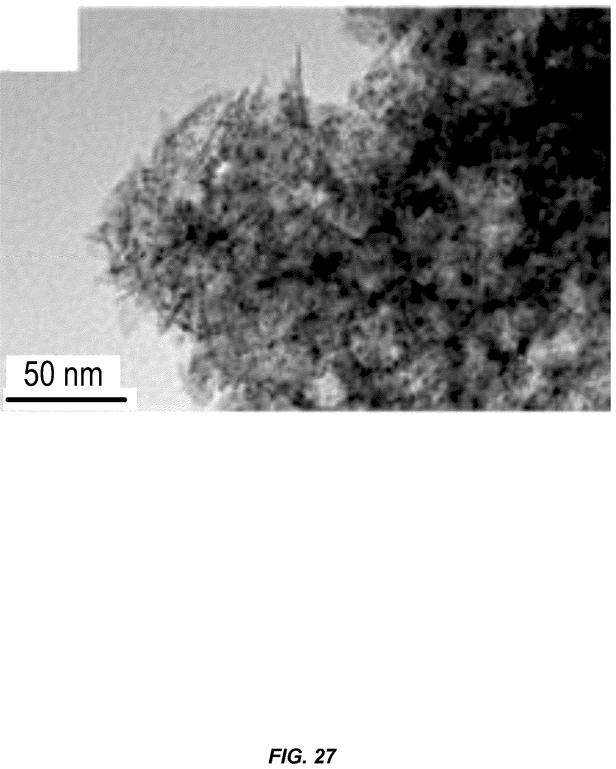

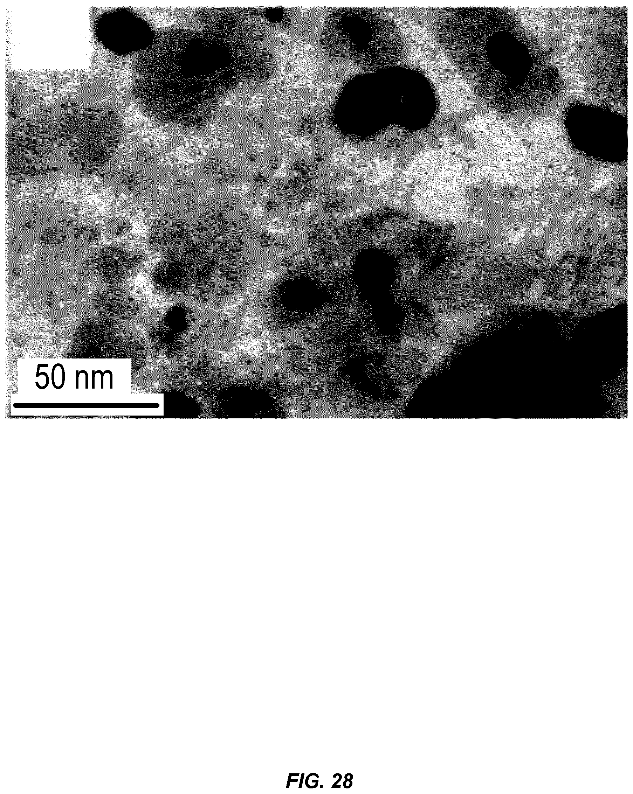

In terms of stability, as analyzed by TEM and shown in FIGS. 25-28, it was observed that the Ru-containing catalysts with a 5 wt. % metal loading experienced more agglomeration after catalysis in comparison to the Ru-containing catalysts with a 2 wt. % metal loading. This result can imply that a metal loading of the oxide support with 2 wt.% in metal may have better performance both in terms of stability and economics (e.g., cost) compared to a higher metal loading of 5 wt. %. This observation was also corroborated by XRD patterns. In particular, a presence of hcp-Ru peaks can be observed in a diffraction pattern of the Ru-containing catalysts with a 5 wt. % metal loading after catalysis but were absent in the Ru-containing catalysts with a 2 wt. % metal loading after catalysis. hcp-Ru peaks can indicate a presence of Ru nanoparticles having a hexagonal-close-packed (hcp) crystal structure. Furthermore, the XRD patterns did not indicate a formation of iron nitride, which implies that lower reaction temperatures registered with the Ru-containing catalysts can allow for better stability of the heating agent 208. This is also related to temperature constancy during the catalytic runs.

Given the relatively high catalytic activity presented by the Ru-containing catalysts under magnetic induction at 300 kHz, additional catalytic tests were performed to investigate their performance on ammonia decomposition under magnetic induction at 100 kHz. By reducing a predefined frequency of a magnetic field provided to heat the catalytic reactor 200 using magnetic induction, the power (in watts) used for ammonia decomposition is diminished, thereby increasing energetic efficiency. As shown below, Table 5 provides results of catalytic testing of Ru-containing catalysts with a 2 wt. % metal loading or a 5 wt. % metal loading at 100 kHz. An ammonia flow rate of 150 mLmin⁻¹ and a heating agent 208 of iron wool was provided to test each Ru-containing catalyst.

**Table 5. Ammonia decomposition in presence of iron wool (heating agent) and a Ru-containing catalyst with oxide supports using magnetic induction at 100 kHz**

| Metal Loading (wt. %) | Magnetic field (mT) | Power (W) | Time (minutes) | Temperature (°C) | Conversion (%) |
|---|---|---|---|---|---|
| 5 | 23.6 | 70 | 6 | 420 | 97 |
| 5 | 25.5 | 103 | 7 | 440 | 99 |
| 5 | 30 | 152 | 10 | 460 | 100 |
| 5 | 36 | 250 | 7 | 490 | 100 |
| 2 | 23.6 | 70 | 5 | 340 | 45 |
| 2 | 26.4 | 119 | 14 | 400 | 93 |
| 2 | 31.2 | 201 | 10 | 435 | 98 |
| 2 | 36 | 250 | 14 | 450 | 100 |

Both Ru-containing catalysts with 2 wt. % metal loading and 5 wt. % metal loading attained 100% conversion in a relatively short period of time (e.g., from 7 minutes to 14 minutes) when using a magnetic field amplitude of 36 mT, which corresponds to a power of 250 W. As stated above, decreasing the predefined frequency can result in a lower power usage. The power usage of 36 mT for a predefined frequency of 100 kHz was much lower than the power used in the magnetic induction at 100 kHz frequency. Furthermore, as shown in Table 5, both types of the Ru-containing catalysts can achieve more than 90% conversion when applying lower magnetic field amplitudes that can correspond to power usage between 100 W and 200 W. Moreover, the Ru-containing catalysts with 5 wt. % metal loading attained a 97% conversion at the lowest working power (e.g., 70 W) tested.

In magnetic induction catalysis that employs iron wool as a heating agent 208, a reaction temperature reached by the catalytic reactor 200 is dependent on the magnetic field amplitude used. An increase in the magnetic field amplitude can correspond to an increase in the reaction temperature. For the catalytic tests performed at 100 kHz frequency, the temperatures registered were the lowest temperatures registered for full ammonia decomposition (e.g., 100% conversion of ammonia). Furthermore, a conversion of 45% can be attained at a temperature of 340 ºC, which was the lowest temperature registered in the catalytic tests of Examples 3-6 and a relatively low temperature in general with respect to catalytic decomposition of ammonia. In general, both Ru-containing catalysts provided an efficient and stable method to achieve full ammonia decomposition in relatively short times and at relatively low reaction temperatures, at both frequencies (e.g., 100 kHz and 300 kHz) investigated in Example 6.

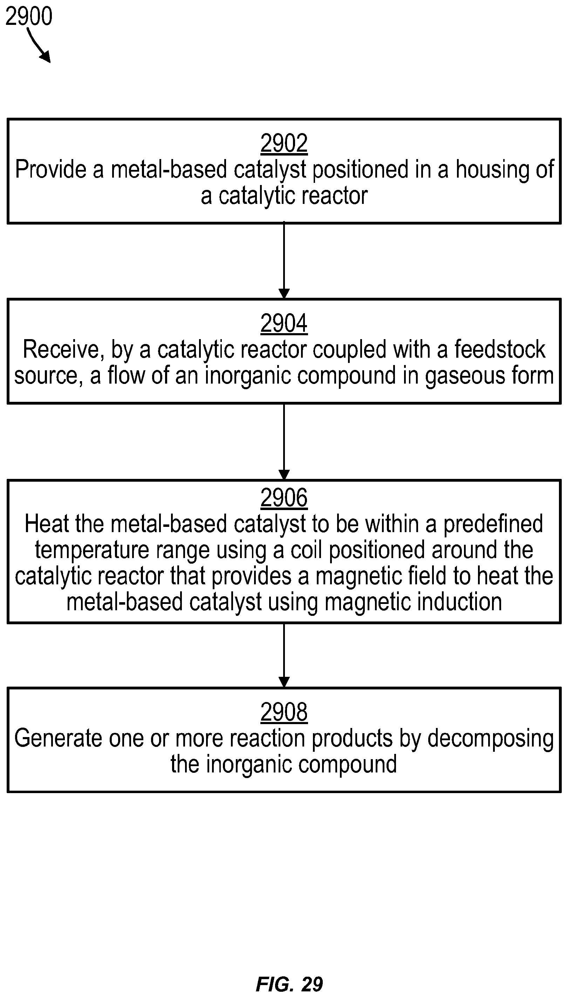

FIG. 29 is a flowchart of a process 2900 to decompose an inorganic compound using a catalytic reactor 102 heated using magnetic induction according to some examples of the present disclosure. Other examples may involve more steps, fewer steps, different steps, or a different sequence of steps than are shown. The steps of FIG. 2900 are described below with reference to the components of FIG. 1 and FIG. 2 above.

At block 2902, a metal-based catalyst 106 can be provided and positioned in a housing 202 of a catalytic reactor 102. Providing the metal-based catalyst 106 can involve selecting a suitable catalyst to facilitate a decomposition reaction. The metal-based catalyst 106 can be selected to decompose an inorganic compound into one or more reaction products within a predefined temperature range (e.g., from 300 °C to 700 °C). Prior to positioning the metal-based catalyst 106 in the catalytic reactor 102, a synthesis process can be performed to produce the metal-based catalyst 106, such as using thermal decomposition, impregnation, etc. In some examples, positioning the metal-based catalyst 106 in the housing 202 of the catalytic reactor 102 can involve packing the metal-based catalyst 106 in a catalyst bed 206 of the catalytic reactor 102 such that the metal-based catalyst 106 is in a fixed position.

At block 2904, a flow of the inorganic compound in gaseous form is received by the catalytic reactor 102 coupled with a feedstock source (e.g., the feedstock 104 of FIG. 1). As an example, the feedstock source can be a mixer that receives a high-purity (e.g., above 80% purity) stream of ammonia from a tank and a recycle stream including unreacted ammonia separated from an outlet fluid flow 120 of the catalytic reactor 102. The mixer can combine the high-purity stream and the recycle stream to form the feedstock 104 that is received by the catalytic reactor 102.

In some cases, a flow rate (e.g., volumetric flow rate) of the feedstock 104 can be adjusted, such as based on a target conversion of the inorganic compound. For example, a slower flow rate may result in a higher conversion (e.g., decomposition) of the inorganic compound than a faster flow rate due to an increase in residence time. Residence time can correspond to a time spent by the inorganic compound or the feedstock 104 within the catalytic reactor 102. As an example, an average residence time can be determined by dividing a reactor volume by the volumetric flow rate. Accordingly, a decrease in the volumetric flow rate can increase the residence time such that the inorganic compound has a higher likelihood of undergoing the decomposition reaction in the catalytic reactor 102.

At block 2906, the metal-based catalyst 106 is heated to be within the predefined temperature range using a coil 210 positioned around the catalytic reactor 102. The coil 210 can provide a magnetic field to heat the metal-based catalyst 106 using magnetic induction. The metal-based catalyst 106 can include metallic nanoparticles that can dissipate heat when subjected to the magnetic field. As an example, if the metal-based catalyst is a Ru-supported catalyst including Ru nanoparticles, the Ru nanoparticles may generate heat by hysteresis losses due to their magnetic properties.

At block 2908, the reaction products are generated by decomposing the inorganic compound. In some examples, the reaction products may be generated onsite at a chemical plant or another suitable location proximate to or near a point of delivery. The decomposition reaction of the inorganic compound may occur once an activation energy threshold is met. In some examples in which ammonia undergoes the decomposition reaction, hydrogen gas and nitrogen gas can be generated as the reaction products outputted by the catalytic reactor 102. The metal-based catalyst 106 can facilitate the decomposition reaction to occur at relatively low temperatures by lowering the activation energy threshold.

In some examples, the reaction products can be further processed or refined prior to being outputted by the catalytic reactor 102 or otherwise used. The reaction products may be transported to any suitable subsystem or any suitable post-processing devices. For example, as described above with respect to FIG. 1, the reaction products may be transmitted to a separation module 122 to undergo purification and remove contaminants, byproducts, unreacted portions of the inorganic compound, or a combination thereof. More specifically, for ammonia decomposition, the separation module 122 can separate hydrogen from nitrogen and any unreacted ammonia to generate a high-purity (e.g., above 80% purity) hydrogen stream. The high-purity hydrogen stream can be provided as a gaseous fuel source to hydrogen fuel cells that can use the high-purity hydrogen stream to generate electricity.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure.

## Claims

1. A catalytic reactor comprising:
a housing coupled with a feedstock source to receive a flow of an inorganic compound in gaseous form that flows through the catalytic reactor, the housing comprising:
a metal-based catalyst selected to decompose the inorganic compound into one or more reaction products within a predefined temperature range, wherein the metal-based catalyst comprises a heating agent configured to increase in temperature when exposed to a magnetic field; and
a coil positioned around the housing to provide the magnetic field to heat the metal-based catalyst using magnetic induction to be within the predefined temperature range; optionally, wherein the predefined temperature range is from 300 °C to 700 °C, and/or wherein a magnetic field amplitude of the magnetic field provided by the coil ranges from 10 mT to 100 mT.

2. The catalytic reactor of claim 1, wherein the heating agent comprises iron filaments having a thickness ranging from 40 µm to 300 µm.

3. The catalytic reactor of claim 1, wherein the metal-based catalyst is coated with a protective compound to prevent deactivation of the metal-based catalyst.

4. The catalytic reactor of claim 1, wherein the metal-based catalyst comprises a plurality of metallic nanoparticles coupled to a catalyst support, and wherein the plurality of metallic nanoparticles comprises Ru or Ni.

5. The catalytic reactor of claim 4, wherein a metal loading of the plurality of metallic nanoparticles ranges from 1.5 wt. % to 10 wt. %.

6. The catalytic reactor of claim 1, wherein the inorganic compound comprises ammonia, and wherein the one or more reaction products comprise nitrogen and hydrogen.

7. The catalytic reactor of claim 4, wherein the catalyst support comprises carbon, a metal oxide, a silicon oxide, a molecular sieve, or a metal-organic framework.

8. A method comprising:
providing a metal-based catalyst positioned in a housing of a catalytic reactor, the metal-based catalyst selected to decompose an inorganic compound into one or more reaction products within a predefined temperature range, wherein the metal-based catalyst comprises a heating agent that increases in temperature when exposed to a magnetic field;
receiving, by the catalytic reactor coupled with a feedstock source, a flow of the inorganic compound in gaseous form;
heating the metal-based catalyst to be within the predefined temperature range using a coil positioned around the catalytic reactor, the coil providing the magnetic field to heat the metal-based catalyst using magnetic induction; and
generating the one or more reaction products by decomposing the inorganic compound.

9. The method of claim 8, wherein the predefined temperature range is from 300 °C to 700 °C.

10. The method of claim 8, wherein the inorganic compound comprises ammonia, and wherein the one or more reaction products comprise nitrogen and hydrogen.

11. The method of claim 8, wherein a magnetic field amplitude of the magnetic field provided by the coil ranges from 10 mT to 100 mT.

12. The method of claim 8, further comprising separating at least one reaction product of the one or more reaction products to generate a purified gaseous product that is usable as a fuel source.

13. A system comprising:
a catalytic reactor coupled with a feedstock source to receives a flow of an inorganic compound in gaseous form to decompose the inorganic compound into one or more reaction products, the catalytic reactor comprising:
a housing comprising a metal-based catalyst that decomposes the inorganic compound into the one or more reaction products within a predefined temperature range, wherein the metal-based catalyst comprises a heating agent configured to increase in temperature when exposed to a magnetic field; and
a coil positioned around the housing of the catalytic reactor to provide the magnetic field to heat the metal-based catalyst using magnetic induction to be within the predefined temperature range; and
one or more subsystems that receives an outlet fluid flow of the catalytic reactor to generate a purified gaseous product using the one or more reaction products, the purified gaseous product usable as a fuel source.

14. The system of claim 13, wherein the predefined temperature range is from 300 °C to 700 °C.

15. The system of claim 13, wherein the heating agent comprises iron filaments having a thickness ranging from 40 µm to 300 µm.
